# EUROPEAN PATENT APPLICATION

(11) **EP 2 197 209 A1**
(43) Date of publication of application: **16.06.2010**
(21) Application number: 08835754.6
(22) Date of filing: 01.10.2008
(51) Int. Cl.: H04N 7/173, H04N 5/44

(54) **TRANSMISSION DEVICE, IMAGE DATA TRANSMISSION METHOD, RECEPTION DEVICE, AND IMAGE DISPLAY METHOD IN RECEPTION DEVICE**

(30) Priority: 02.10.2007 JP 2007258351
(71) Applicant: Sony Corporation, Tokyo 108-0075 (JP); Sony Computer Entertainment Inc., Minato-ku Tokyo 107-0062 (JP)
(72) Inventor: OHBA, Akio, Tokyo 107-0062 (JP); NAKAJIMA, Yasuhisa, Tokyo 108-0075 (JP)
(74) Representative: Thévenet, Jean-Bruno
(86) International application number: PCT/JP2008/067799
(87) International publication number: WO 2009/044762

(57) **Abstract**

A game machine 210 and a television receiver 250 are connected to each other through an HDMI cable 351. Additional-value image data for performing display of an additional-value added image that is, for instance, added with grain noise or converted to high resolution is transmitted from the game machine 210 to the television receiver 250 along with main image data of a game, a movie, or the like. In this case, the main image data (MPEG data) is transmitted in an IP packet by using a high-speed data line, and the additional-value image data (baseband) is transmitted by using an HDMI TMDS channel. The television receiver 250 performs image display based on the main image data and the additional-value image data. Image processing resources of the game machine 210 can be efficiently used. Also, an additional value outside the standard can be achieved without being limited by the bandwidth, or the like, of the transmission line. Also, a low-latency interface screen can be provided to a user.

## Description

### Technical Field

The present invention relates to a transmission device, an image data transmission method, a reception device, and an image display method of the reception device.

More particularly, the present invention is an invention relating to a transmission device and the like enabling to favorably perform display of an additional-value added image at an external device by providing, besides a signal transmitting section for unidirectionally transmitting a baseband video signal as a differential signal to the external device through a transmission line via multiple channels, a communication section for performing bidirectional communication by using predetermined lines forming the transmission line, and by transmitting at least second image data adding to first image data an additional value corresponding to the first image to the external device by the signal transmitting section or the communication section.

Also, the present invention is an invention relating to a reception device and the like capable of favorably performing display of an additional-value added image by providing, besides a signal receiving section for receiving a baseband video signal as a differential signal from an external device through a transmission line via multiple channels, a communication section for performing bidirectional communication by using predetermined lines forming the transmission line, and by performing image display using at least second image data, which is received by a signal transmitting section or the communication section and which adds to first image data additional value corresponding to the first image data, and the first image data.

### Background Art

In recent years, a High Definition Multimedia Interface (HDMI) is becoming widespread as a communication interface for transmitting, at high speed, a digital video signal, i.e., a non-compressed (baseband) video signal (hereinafter referred to as "image data"), and a digital audio signal (hereinafter referred to as "audio data") of the video signal from a digital versatile disc (DVD) recorder, a set-top box, or other Audio Visual Source (AV source) to a television receiver, a projector, or other display. Details of the HDMI standard are described in Patent Document 1, for example.

Patent Document 1: WO 2002/078336

### Disclosure of the Invention

### Problems to be Solved by the Invention

There is a limitation on framework and bandwidth for the HDMI. Thus, to perform display of an additional-value added image by a television receiver, the television receiver needed to generate and combine data, or a video recorder or a reproduction device (a disk player, a game machine, or the like) needed to achieve final image data.

In a case of the television receiver generating and combining data, since image processing resources, such as a CPU and a memory, of the television receiver is limited to a large degree, or, since the television receiver does not possess image data source information in many cases, limitation is too restrictive to add an additional value, and various additional value services cannot be received.

Also, in a case of achieving final image data in the video recorder or the reproduction device, since there is a limitation due to the bandwidth of a transmission line, or the like, an additional value outside the standard cannot be achieved, and also, there is a problem of latency since every interactive additional value data is subjected to the image processings in the television receiver.

The object of the present invention is to enable favorable display of an additional-value added image.

### Means for Solving the Problems

The concept of the present invention lies in a transmission device including a signal transmitting section for unidirectionally transmitting a baseband video signal as a differential signal to an external device through a transmission line via multiple channels, and a communication section for performing bidirectional communication by using predetermined lines forming the transmission line, wherein at least second image data adding to first image data an additional value corresponding to the first image data is transmitted to the external device by the signal transmitting section or the communication section.

Also, the concept of the present invention lies in a reception device including a signal receiving section for receiving a baseband video signal as a differential signal from an external device through a transmission line via multiple channels, a communication section for performing bidirectional communication by using predetermined lines forming the transmission line, and an image display section for performing image display using at least second image data, which is received by the signal transmitting section or the communication section and which adds to first image data an additional value corresponding to the first image data, and the first image data.

The transmission device is provided with, besides the signal transmitting section for unidirectionally transmitting a baseband video signal as a differential signal to an external device (reception device) through a transmission line via multiple channels, the communication section for performing bidirectional communication by using predetermined lines forming the transmission line. For example, the predetermined lines are a reserved line and a HPD line forming an HDMI cable. At least second image data adding to first image data an additional value corresponding to the first image data is transmitted to the external device by the signal transmitting section or the communication section. Incidentally, as for the first image data, there is no need to transmit the first image data in a case where it already exists in the external device. For example, a case where the first image data exists in the external device may be a case where the first image data is received from the external device by the communication section, and the second image data is generated based on the first image data.

The second image data is grain noise (film noise) data, high resolution difference data, luminance difference data, or the like, for example. Also, the second image data is interpolation image data to be interpolated between frames of the first image data, or image data for a left eye or a right eye, for example. Also, the second image data is image data for interface screen.

The reception device is provided with, besides the signal receiving section for receiving a baseband video signal as a differential signal from an external device (transmission device) through a transmission line via multiple channels, the communication section for performing bidirectional communication by using predetermined lines forming the transmission line. Image display using at least second image data, which is received by the signal transmitting section or the communication section and which adds to first image data an additional value corresponding to the first image data, and the first image data is performed.

The present invention is configured to transmit, from the transmission device to the reception device, the second image data for adding an additional value separately from the first image data, and to use the second image data. Accordingly, image processing resources of the transmission device can be used effectively to obtain the second image data. Also, an additional value exceeding the standard can also be achieved without being limited by the bandwidth or the like of the transmission line. That is, a favorable display of an additional-value added image can be performed.

### Effect of the Invention

According to the present invention, besides the signal transmitting section for unidirectionally transmitting a baseband video signal as a differential signal to an external device through a transmission line via multiple channels, the communication section for performing bidirectional communication by using predetermined lines forming the transmission line is provided, and at least second image data adding to first image data an additional value corresponding to the first image data is transmitted to the external device by the signal transmitting section or the communication section, enabling favorable display of an additional-value added image by the external device.

Also, according to the present invention, besides the signal receiving section for receiving a baseband video signal as a differential signal from an external device through a transmission line via multiple channels, the communication section for performing bidirectional communication by using predetermined lines forming the transmission line is provided, and image display using at least second image data, which is received by the signal transmitting section or the communication section and which adds to first image data an additional value corresponding to the first image data, and the first image data is performed, enabling favorable display of an additional-value added image.

### Brief Description of the Drawings

FIG. 1 is a block diagram showing a configuration example of an AV system as an embodiment of the present invention;
FIG. 2 is a block diagram showing a configuration example of a game machine (source device) configuring the AV system;
FIG. 3 is a block diagram showing a configuration example of a television receiver (sink device) configuring the AV system;
FIG. 4 is a block diagram showing configuration examples of an HDMI transmitting section (HDMI source) and an HDMI receiving section (HDMI sink);
FIG. 5 is a block diagram showing configuration examples of an HDMI transmitter and an HDMI receiver;
FIG. 6 is a diagram showing a TMDS transmission data structure;
FIG. 7 is a diagram showing a pin arrangement (type A) of an HDMI terminal;
FIG. 8 is a connection diagram showing a configuration example of high-speed data line interfaces of the game machine and the television receiver;
FIG. 9 is a diagram showing a case where grain noise data is transmitted as additional-value image data from the game machine to the television receiver;
FIG. 10 is a diagram showing a case where high resolution difference data is transmitted as the additional-value image data from the game machine to the television receiver;
FIG. 11 is a diagram for describing the game machine obtaining synchronization information from the television receiver;
FIG. 12 is a diagram for describing the synchronization information;
FIG. 13 is a diagram showing a case where luminance difference data is transmitted as the additional-value image data from the game machine to the television receiver;
FIG. 14 is a diagram showing a case where interpolation image data for conversion to high frame rate is transmitted as the additional-value image data from the game machine to the television receiver;
FIG. 15 is a diagram showing a case where image data for a left eye or a right eye is transmitted as the additional-value image data for stereo display from the game machine to the television receiver;
FIG. 16 is a diagram showing a case where image data for interface screen is transmitted as the additional-value image data from the game machine to the television receiver;
FIG. 17 is a diagram showing a case where image data for interface screen is transmitted as the additional-value image data from the game machine to the television receiver;
FIG. 18 is a diagram showing an example of a case where main image data is transmitted by using an HDMI TMDS channel, and the additional-value image data is transmitted by using a high-speed data line;
FIG. 19 is a diagram showing an example of a case where the main image data is transmitted by using the HDMI TMDS channel, and the additional-value image data is transmitted by using the high-speed data line;
FIG. 20 is a connection diagram showing another configuration example of the high-speed data line interfaces of the game machine and the television receiver;
FIG. 21 is a connection diagram showing further another configuration example of the high-speed data line interfaces of the game machine and the television receiver;
FIG. 22 is a diagram showing a structure of E-EDID to be received by the source device;
FIG. 23 is a diagram showing an E-EDID Vendor Specific Data Block structure;
FIG. 24 is a flow chart for describing a communication process by the source device;
FIG. 25 is a flow chart for describing a communication process by the sink device;
FIG. 26 is a flow chart for describing a communication process by the source device;
FIG. 27 is a flow chart for describing a communication process by the sink device;
FIG. 28 is a connection diagram showing another configuration example of the high-speed data line interfaces of the game machine and the television receiver;
FIG. 29 is a flow chart for describing a communication process by the source device;
FIG. 30 is a flow chart for describing a communication process by the sink device;
FIG. 31 is a block diagram showing a configuration example of a computer to which the present invention is applied;
FIG. 32 is a connection diagram showing further another configuration example of the high-speed data line interfaces of the game machine and the television receiver; and
FIG. 33 is a diagram showing bidirectional communication waveforms. Explanation of Reference Numerals

- 200: AV system
- 210: game machine
- 211: HDMI terminal
- 212: HDMI transmitting section
- 213: high-speed data line interface
- 250: television receiver
- 251: HDMI terminal
- 252: HDMI receiving section
- 253: high-speed data line interface
- 268: combining section
- 351: HDMI cable

### Best Mode for Carrying Out the Invention

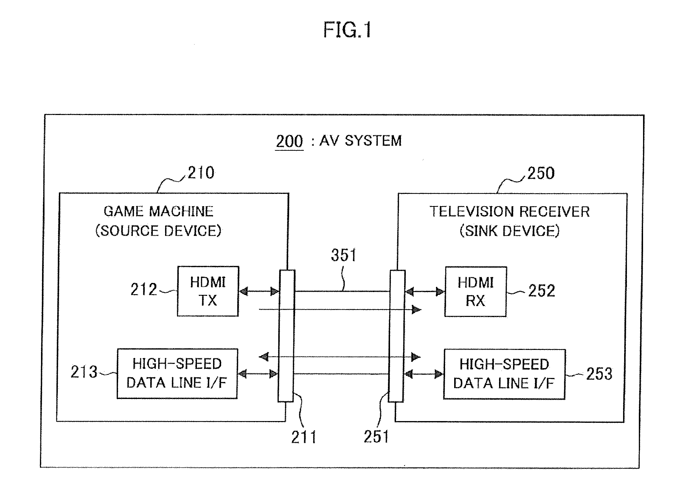

Hereinafter, embodiments of the present invention will be explained with reference to the appended drawings. FIG. 1 shows a configuration example of an audio visual (AV) system 200 as an embodiment.

The AV system 200 includes a game machine 210 as a source device and a television receiver 250 as a sink device.

The game machine 210 and the television receiver 250 are connected to each other through an HDMI cable 351. The game machine 210 is provided with an HDMI terminal 211 to which an HDMI transmitting section (HDMITX) 212 and a high-speed data line interface (I/F) 213 are connected. The television receiver 250 is provided with an HDMI terminal 251 to which an HDMI receiving section (HDMIRX) 252 and a high-speed data line interface (I/F) 253 are connected. One end of the HDMI cable 351 is connected to the HDMI terminal 211 of the game machine 210 and the other end of the HDMI cable 351 is connected to the HDMI terminal 251 of the television receiver 250.

In the AV system 200 shown in FIG. 1, main image data (first image data) of a game, a movie, or the like, is transmitted in an Ethernet IP packet from the game machine 210 to the television receiver 250 by using a high-speed data line. Also, additional-value image data (second image data) that adds to the above-described main image data an additional value corresponding to the main image data is transmitted from the game machine 210 to the television receiver 250 by using an HDMI TMDS channel. Then, the television receiver 250 performs image display using the main image data and the additional-value image data transmitted from the game machine 210. A concrete example of the additional-value image data will be described later.

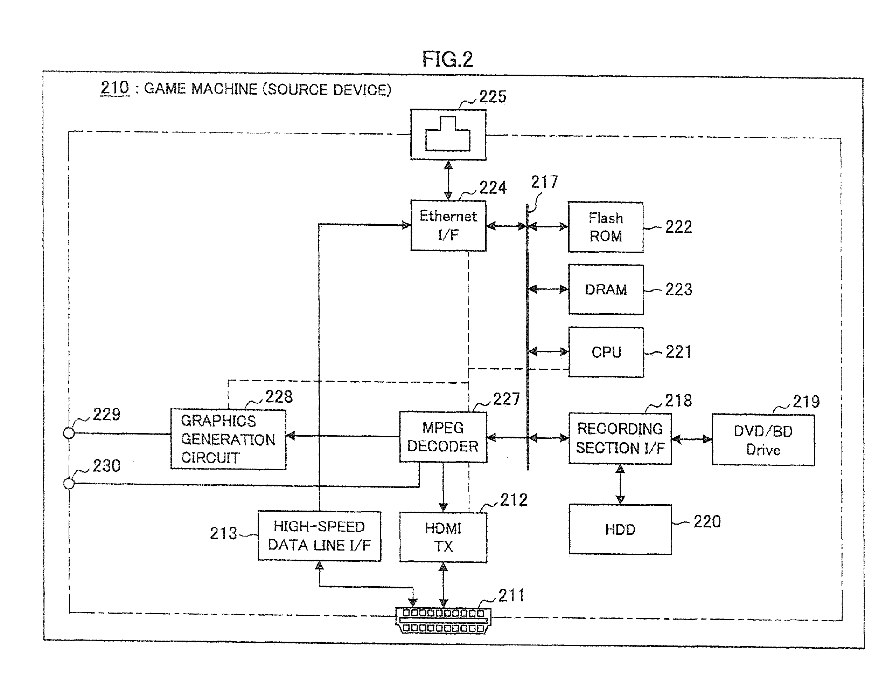

FIG. 2 shows a configuration example of the game machine 210. The game machine 210 includes the HDMI terminal 211, the HDMI transmitting section 212, the high-speed data line interface 213, an internal bus 217, a recording section interface 218, a Digital Versatile Disk/Blu-ray Disc (DVD/BD) drive 219, a Hard Disk Drive (HDD) 220, a Central Processing Unit (CPU) 221, a flash Read Only Memory (ROM) 222, a Dynamic Random Access Memory (DRAM) 223, an Ethernet interface (I/F) 224, a network terminal 225, an MPEG decoder 227, a graphics generation circuit 228, a video output terminal 229, and an audio output terminal 230. Incidentally, "Ethernet" and "Blu-ray" are registered trademarks.

The HDMI transmitting section (HDMI source) 212 transmits baseband video (image) and audio data from the HDMI terminal 211 by a communication according to HDMI. The details of the HDMI transmitting section 212 will be described later. The high-speed data line interface 213 is an interface for bidirectional communication using predetermined lines (a reserved line and a HPD line in the present embodiment) forming the HDMI cable. The high-speed data line interface 213 is arranged between the Ethernet interface 224 connected to the network terminal 225 and the HDMI terminal 211 to which the HDMI cable is to be connected. The details of the high-speed data line interface 213 will be described later.

The CPU 221, the flash ROM 222, the DRAM 223, a demultiplexer 216, the Ethernet interface 224, the MPEG decoder 227 and the recording section interface 218 are connected to the internal bus 217. The DVD/BD drive 219 and the HDD 220 are connected to the internal bus 217 through the recording section interface 218.

The MPEG decoder 227 obtains video data by performing a decoding process on a video PES packet configuring a partial TS reproduced by the DVD/BD drive 219 or the HDD 220. Also, the MPEG decoder 227 obtains audio data by performing a decoding process on an audio PES packet configuring the corresponding partial TS.

The graphics generation circuit 228 performs on the video data obtained by the MPEG decoder 227, a graphics data superimposing processing, or the like, as necessary. A video output terminal 229 outputs the video data outputted from the graphics generation circuit 228. An audio output terminal 230 outputs the audio data obtained by the MPEG decoder 227.

The CPU 221 controls the operation of each section of the game machine 210. The flash ROM 222 stores control software and archives data. The DRAM 223 configures a working area of the CPU 221. The CPU 221 activates the software by developing, on the DRAM 223, the software or data read out from the flash ROM 222, and controls each section of the game machine 210.

The operation of the game machine 210 shown in FIG. 2 will be briefly described.

The operation at the time of downloading video content from the Internet or the like will be described. In such a case, the partial TS received by Ethernet interface 224 through the network terminal 225 is supplied to the recording section 218 through the internal bus 217, and is recorded on the DVD/BD drive 219 or the HDD 220.

Next, the operation at the time of reproducing video content or game content recorded on the DVD/BD drive 219 or the HDD 220 will be described. The partial TS (main image data) relating to the main image of the game or the movie to be reproduced by the DVD/BD drive 219 or the HDD 220 is supplied to the high-speed data line interface 213 through the Ethernet interface 224, and is transmitted, as an IP packet, to the HDMI cable connected to the HDMI terminal 211.

Also, at the time of reproduction, baseband additional-value image data corresponding to the partial TS relating to the main image described above is supplied to the HDMI transmitting section 212. The additional-value image data is transmitted to the HDMI cable from the HDMI terminal 211 through the HDMI TMDS channel. For example, the additional-value image data is acquired or generated in advance in accordance with the main image data. Furthermore, the additional-value image data is generated at the time of transmission of the main image data, for example.

Incidentally, at the time of the reproduction, the partial TS relating to the main image of the game or the movie to be reproduced by the DVD/BD drive 219 or the HDD 220 is supplied to the MPEG decoder 227. The MPEG decoder 227 performs the decoding process on the video PES packet to obtain video data. The video data is outputted to the video output terminal 229 after the graphics data superimposing processing, or the like, is performed thereon by the graphics generation circuit 228. Also, the MPEG decoder 227 performs the decoding process on the audio PES packet to obtain the audio data. The audio data is outputted to the audio output terminal 230.

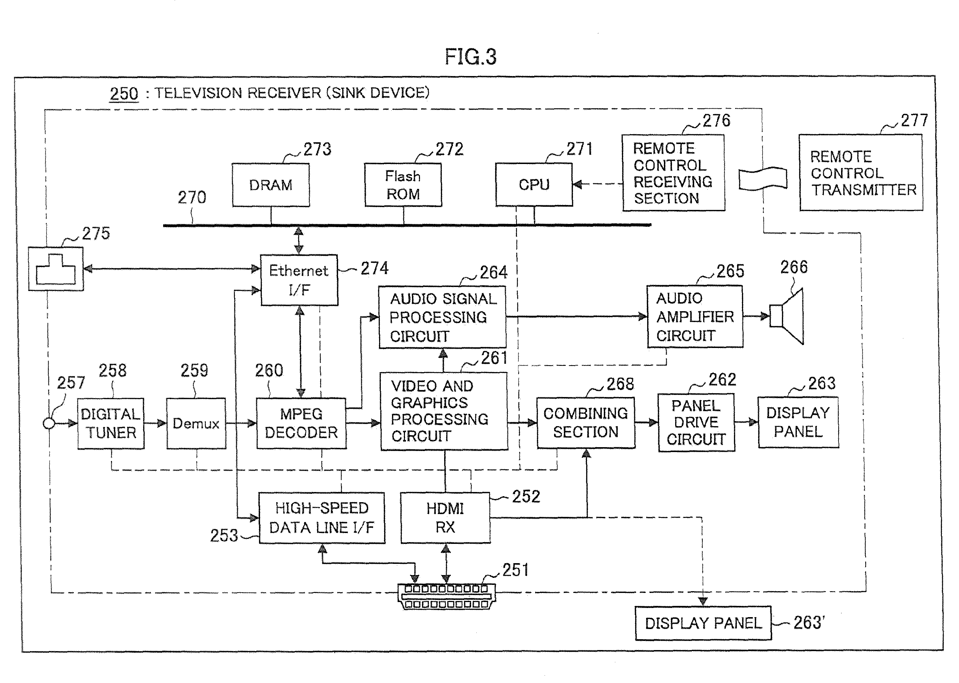

FIG. 3 shows a configuration example of the television receiver 250. The television receiver 250 includes the HDMI terminal 251, the HDMI receiving section 252, the high-speed data line interface 253, an antenna terminal 257, a digital tuner 258, a demultiplexer 259, a Moving Picture Expert Group (MPEG) decoder 260, a video and graphics processing circuit 261, a panel drive circuit 262, a display panel 263, an audio signal processing circuit 264, an audio amplifier circuit 265, a speaker 266, a combining section 268, an internal bus 270, a CPU 271, a flash ROM 272, a DRAM 273, an Ethernet interface (I/F) 274, a network terminal 275, a remote control receiving section 276, and a remote control transmitter 277.

The antenna terminal 257 is a terminal for inputting a television broadcast signal received by a receiving antenna (not shown). The digital tuner 258 processes the television broadcast signal inputted to the antenna terminal 257, and outputs a predetermined transport stream corresponding to a channel selected by a user. The demultiplexer 259 extracts a partial TS (Transport Stream) (TS packet of video data, TS packet of audio data) corresponding to the channel selected by the user from the transport stream obtained by the digital tuner 258.

Also, the demultiplexer 259 extracts Program Specific Information/Service Information (PSI/SI) from the transport stream obtained by the digital tuner 258, and outputs the PSI/SI to the CPU 271. Multiple channels are multiplexed in the transport stream obtained by the digital tuner 258. A process of extracting the partial TS of an arbitrary channel from the transport stream by the demultiplexer 259 is enabled by obtaining information of a packet ID (PID) of the arbitrary channel from the PSI/SI (PAT/PMT).

The MPEG decoder 260 obtains the video data by performing a decoding process on a video Packetized Elementary Stream (PES) packet configured from a TS packet of the video data obtained by the demultiplexer 259. Also, the MPEG decoder 260 obtains the audio data by performing a decoding process on an audio PES packet configured from a TS packet of the audio data obtained by the demultiplexer 259.

Also, the MPEG decoder 260 obtains the video data and the audio data by performing a decoding process on the PES packet of the video and audio of the partial TS (MPEG stream) received by the Ethernet interface 274.

When necessary, the video and graphics processing circuit 261 performs a multi-screen processing, the graphics data superimposing processing, or the like, on the video data obtained by the MPEG decoder 260. The panel drive circuit 262 drives the display panel 263 based on the video data outputted from the video and graphics processing circuit 261. The display panel 263 is configured from a liquid crystal display (LCD), a plasma display panel (PDP), or the like, for example. The audio signal processing circuit 264 performs a necessary process, such as D/A conversion, on the audio data obtained by the MPEG decoder 260. The audio amplifier circuit 265 amplifies the audio signal outputted from the audio signal processing circuit 264, and supplies the amplified audio signal to the speaker 266.

The CPU 271 controls the operation of each section of the television receiver 250. The flash ROM 272 stores control software and archives data. The DRAM 273 configures a working area of the CPU 271. The CPU 271 activates the software by developing, on the DRAM 273, the software or data read out from the flash ROM 272, and controls each section of the television receiver 250. The remote control receiving section 276 receives a remote control signal (remote control code) transmitted from the remote control transmitter 277, and supplies the remote control signal to the CPU 271. The CPU 271, the flash ROM 272, the DRAM 273, and the Ethernet interface 274 are connected to the internal bus 270.

The HDMI receiving section (HDMI sink) 252 receives baseband video (image)/audio data supplied to the HDMI terminal 251 by a communication according to HDMI. The details of the HDMI receiving section 252 will be described later. The high-speed data line interface 253 is an interface for bidirectional communication using predetermined lines (a reserved line and a HPD line in the present embodiment) forming the HDMI cable. The high-speed data line interface 253 is arranged between the Ethernet interface 274 to which the network terminal 275 is connected and the HDMI terminal 252. The details of the high-speed data line interface 253 will be described later.

The combining section 268 is arranged between the video and graphics processing circuit 261 and the panel drive circuit 262. When the input is switched to that from the game machine 210 described above, the combining section 268 combines the additional-value image data received by the HDMI receiving section 252 with the main image data outputted from the video and graphics processing circuit 261. Here, combining means addition, insertion, or the like. Incidentally, depending on the type of the additional-value image data, the additional-value image data may be used without being combined with the main image data.

The operation of the television receiver 250 shown in FIG. 3 will be briefly described.

The operation at the time of viewing the television will be described. The television broadcast signal inputted to the antenna terminal 257 is supplied to the digital tuner 258. The digital tuner 258 processes the television broadcast signal, outputs the predetermined transport stream corresponding to the channel selected by the user, and supplies the predetermined transport stream to the demultiplexer 259. The demultiplexer 259 extracts the partial TS (TS packet of video data, TS packet of audio data) corresponding to the channel selected by the user from the transport stream, and supplies the partial TS to the MPEG decoder 260.

The MPEG decoder 260 obtains the video data by performing a decoding process on a video PES packet configured from the TS packet of the video data. The video data is supplied to the panel drive circuit 262 after being performed the multi-screen processing, the graphics data superimposing processing, or the like, as necessary by the video and graphics processing circuit 261. Thus, an image corresponding to the channel selected by the user is displayed on the display panel 263.

Also, the MPEG decoder 260 obtains the audio data by performing a decoding process on the audio PES packet configured from the TS packet of the audio data. The audio data is supplied to the speaker 266 after being performed a necessary process, such as D/A conversion, by the audio signal processing circuit 264, and further, being amplified by the audio amplifier circuit 265. Thus, an audio corresponding to the channel selected by the user is outputted from the speaker 266.

Next, the operation in a case where the input is switched to that from the game machine 210 will be described. The partial TS received by the high-speed data line interface 253 through the HDMI terminal 251 is supplied to the MPEG decoder 260 through the Ethernet interface 274. Similar to a case where viewing the television as described above, the MPEG decoder 260 performs a decoding process on the partial TS, and obtains the main image data and the audio data corresponding to the main image data.

The audio data obtained by the MPEG decoder 260 is outputted to the speaker 266 after being performed a necessary process, such as D/A conversion, by the audio signal processing circuit 264, and further, being amplified by the audio amplifier circuit 265. Thereby, audio output of a game of a movie can be obtained from the speaker 266.

Also, the image data obtained by the MPEG decoder 260 is supplied to the combining section 268 after being processed by the video and graphics processing circuit 261. Also, the additional-value image data received by the HDMI receiving section 252 is directly supplied to the combining section 268.

The combining section 268 combines the additional-value image data received by the HDMI receiving section 252 with the main image data outputted from the video and graphics processing circuit 261. A combined image data obtained by the combining section 268 in such a manner is supplied to the panel drive circuit 262. Thereby, a n image based on the combined image data is displayed on the display panel 263.

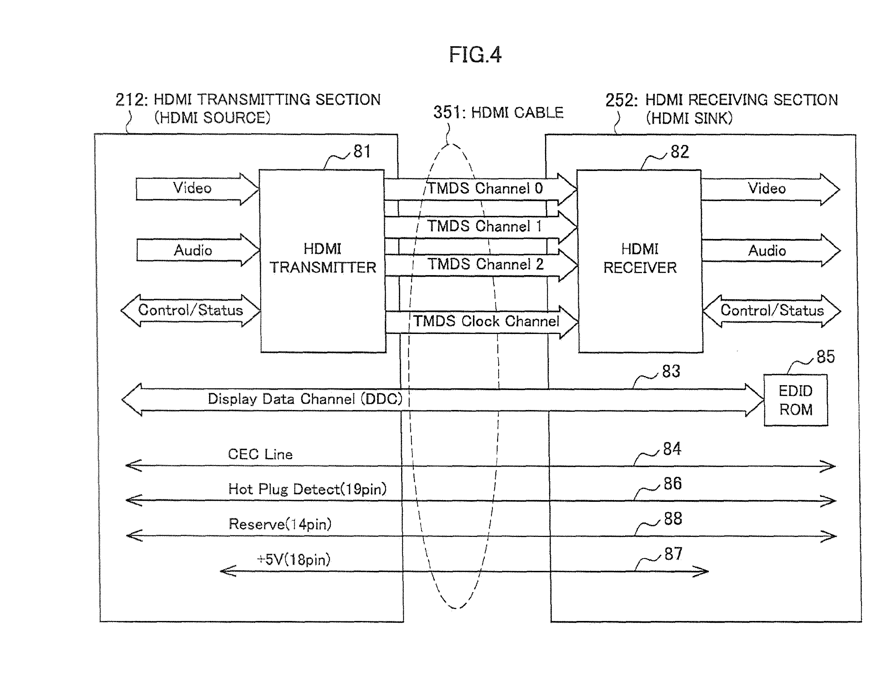

FIG. 4 shows configuration examples of the HDMI transmitting section (HDMI source) 212 of the game machine 210 and the HDMI receiving section (HDMI sink) 252 of the television receiver 250 in the AV system 200 of FIG. 1.

The HDMI source 212 unidirectionally transmits a differential signal corresponding to pixel data of an image for one uncompressed screen to the HDMI sink 252 through multiple channels during an effective image period (hereinafter referred to as an active video period as appropriate), which is a period excluding a horizontal blanking period and a vertical blanking period from a period between a vertical synchronizing signal and the next vertical synchronizing signal, and also, unidirectionally transmits at least a differential signal corresponding to audio data, control data, other auxiliary data, or the like, of the image to the HDMI sink 252 through multiple channels during the horizontal blanking period or the vertical blanking period.

That is, the HDMI source 212 includes a transmitter 81. The transmitter 81 converts the pixel data of a non-compressed image to a corresponding differential signal, and unidirectionally and serially transmits the differential signal via three TMDS channels #0, #1, and #2, which are the multiple channels, to an HDMI sink 32 connected through the HDMI cable 351.

Also, the transmitter 81 converts the audio data of the non-compressed image, and also, control data, other auxiliary data, and the like, that are needed, to corresponding differential signals, and unidirectionally and serially transmits the differential signals via the three TMDS channels #0, #1, and #2 to the HDMI sink 252 connected through the HDMI cable 351.

Furthermore, the transmitter 81 transmits, via a TMDS clock channel to the HDMI sink 252 connected through the HDMI cable 351, a pixel clock synchronized with the pixel data transmitted via the three TMDS channels #0, #1, and #2. Here, pixel data of 10 bits are transmitted during one clock of the pixel clock via one TMDS channel #I (I=0,1,2).

The HDMI sink 252 receives the differential signal corresponding to the pixel data unidirectionally transmitted from the HDMI source 212 via the multiple channels during the active video period, and also, receives the differential signal corresponding to the audio data of the control data unidirectionally transmitted from the HDMI source 212 via the multiple channels during the horizontal blanking period or the vertical blanking period.

That is, the HDMI sink 252 includes a receiver 82. The receiver 82 receives the differential signal corresponding to the pixel data and the differential signal corresponding to the audio data or the control data, which are unidirectionally transmitted via the TMDS channels #0, #1 and #2 from the HDMI 212 connected through the HDMI cable 351, in synchronization with the pixel clock similarly transmitted via the TMDS clock channel from the HDMI source 212.

Transmission channels of an HDMI system configured from the HDMI source 212 and the HDMI sink 252 include, besides the three TMDS channels #0 to #2 as transmission channels for unidirectionally and serially transmitting, from the HDMI source 212 to the HDMI sink 252, the image data and the audio data in synchronization with the pixel clock, and the TMDS clock channel as a transmission channel for transmitting the pixel clock, transmission channels called a display data channel (DDC) 83 and a CEC line 84.

The DDC 83 is formed from two signal lines that are not shown included in the HDMI cable 351, and is used by the HDMI source 212 to read Enhanced Extended Display Identification Data (E-EDID) out of the HDMI sink 252 connected through the HDMI cable 351.

That is, besides the HDMI receiver 81, the HDMI sink 252 includes an EDID Read Only Memory (ROM) 85 storing E-EDID, which is capability information relating to the configuration/capability of the HDMI sink 252. The HDMI source 212 reads, via the DDC 83, the E-EDID of the HDMI sink 252 out of the HDMI sink 252 connected through the HDMI cable 351, and identifies, based on the E-EDID, the setting of the capability of the HDMI sink 212, that is, for example, the image format (profile) with which an electronic device including the HDMI sink 252 is compatible, the image format being RGB, YCbCr4:4:4, YCbCr4:2:2, or the like, for example.

The CEC line 84 is formed from one signal line that is not shown included in the HDMI cable 351, and is used for performing bidirectional communication of data for control between the HDMI source 212 and the HDMI sink 252.

Also, the HDMI cable 351 includes a line 86 connected to a pin called a hot plug detect (HPD). The source device can detect the connection of the sink device by using the line 86. Also, the HDMI cable 351 includes a line 87 that is used to supply power from the source device to the sink device. Furthermore, the HDMI cable 351 includes a reserved line 88.

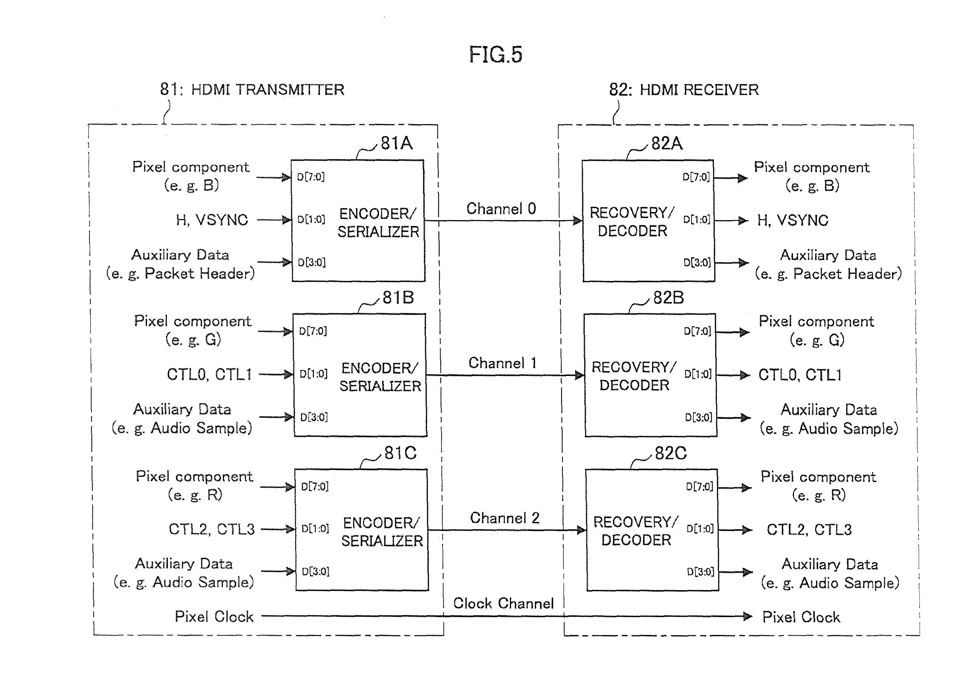

FIG. 5 shows configuration examples of the HDMI transmitter 81 and the HDMI receiver 82 of FIG. 4.

The transmitter 81 includes three encoders/serializers 81A, 81B, and 81C respectively corresponding to the three TMDS channels #0, #1, and #2. Each of the encoders/serializers 81A, 81B, and 81C converts the image data, the auxiliary data and the control data supplied thereto from parallel data to serial data by encoding, and transmits the serial data as a differential signal. Here, where the image data includes three components, i.e., red (R), green (G) and blue (B), B component is supplied to the encoder/serializer 81A, G component is supplied to the encoder/serializer 81B, and R component is supplied to the encoder/serializer 81C.

Also, the auxiliary data may be the audio data or control packet, for example. The control packet is supplied to the encoder/serializer 81A, and the audio data are supplied to the encoders/serializers 81B and 81C, for example.

Furthermore, the control data may be a vertical synchronizing signal (VSYNC) of one bit, a horizontal synchronizing signal (HSYNC) of one bit, and control bits CTL0, CTL1, CTL2, and CTL3, which are respectively one bit. The vertical synchronizing signal and the horizontal synchronizing signal are supplied to the encoder/serializer 81A. The control bits CTL0 and CTL1 are supplied to the encoder/serializer 81B, and the control bits CTL2 and CTL3 are supplied to the encoder/serializer 81C.

The encoder/serializer 81A transmits, in a time division manner, B component, the vertical synchronizing signal, the horizontal synchronizing signal and the auxiliary data, respectively of the image data, supplied thereto. That is, the encoder/serializer 81A converts the B component of the image data supplied thereto to parallel data in units of 8 bits, which is a fixed bit number. Furthermore, the encoder/serializer 81A converts the parallel data to serial data by encoding, and transmits the serial data via TMDS channel #0.

Also, the encoder/serializer 81A converts parallel data of 2 bits, i.e., the vertical synchronizing signal and the horizontal synchronizing signal, supplied thereto to serial data by encoding, and transmits the serial data via TMDS channel #0. Furthermore, the encoder/serializer 81A converts the auxiliary data supplied thereto to parallel data in units of 4 bits. Then, the encoder/serializer 81A converts the parallel data to serial data by encoding, and transmits the serial data via TMDS channel #0.

The encoder/serializer 81B transmits, in a time division manner, G component, the control bits CTL0 and CTL1, and auxiliary data, respectively of the image data, supplied thereto. That is, the encoder/serializer 81B converts the G component of the image data supplied thereto to parallel data in units of 8 bits, which is a fixed bit number. Furthermore, the encoder/serializer 81B converts the parallel data to serial data by encoding, and transmits the serial data via TMDS channel #1.

Also, the encoder/serializer 81B converts parallel data of 2 bits, i.e., the control bits CTL0 and CTL1, supplied thereto to serial data by encoding, and transmits the serial data via TMDS channel #1. Furthermore, the encoder/serializer 81B converts the auxiliary data supplied thereto to parallel data in units of 4 bits. Then, the encoder/serializer 81B converts the parallel data to serial data by encoding, and transmits the serial data via TMDS channel #1.

The encoder/serializer 81C transmits, in a time division manner, R component, the control bits CTL2 and CTL3, and the auxiliary data, respectively of the image data, supplied thereto. That is, the encoder/serializer 81C converts the R component of the image data supplied thereto to parallel data in units of 8 bits, which is a fixed bit number. Furthermore, the encoder/serializer 81C converts the parallel data to serial data by encoding, and transmits the serial data via TMDS channel #2.

Also, the encoder/serializer 81C converts parallel data of 2 bits, i.e., the control bits CTL2 and CTL3, supplied thereto to serial data by encoding, and transmits the serial data via TMDS channel #2. Furthermore, the encoder/serializer 81C converts the auxiliary data supplied thereto to parallel data in units of 4 bits. Then, the encoder/serializer 81C converts the parallel data to serial data by encoding, and transmits the serial data via TMDS channel #2.

The receiver 82 includes three recovery/decoders 82A, 82B, and 82C respectively corresponding to the three TMDS channels #0, #1, and #2. Each of the recovery/decoders 82A, 82B, and 82C receives image data, auxiliary data, and control data, which are transmitted as differential signals via TMDS channels #0, #1, and #2. Furthermore, each of the recovery/decoders 82A, 82B, and 82C converts the image data, the auxiliary data, and the control data from serial data to parallel data, and outputs the parallel data after further decoding.

That is, the recovery/ decoder 82A receives the B component, the vertical synchronizing signal, the horizontal synchronizing signal and the auxiliary data, respectively of the image data, transmitted as differential signals via TMDS channel #0. Then, the recovery/decoder 82A converts the B component, the vertical synchronizing signal, the horizontal synchronizing signal and the auxiliary data, respectively of the image data, from serial data to parallel data, and outputs the parallel data after decoding.

The recovery/ decoder 82B receives the G component, the control bits CTL0 and CTL1, and the auxiliary data, respectively of the image data, transmitted as differential signals via TMDS channel #1. Then, the recovery/decoder 82B converts the G component, the control bits CTL0 and CTL1, and the auxiliary data, respectively of the image data, from serial data to parallel data, and outputs the parallel data after decoding.

The recovery/ decoder 82C receives the R component, the control bits CTL2 and CTL3, and the auxiliary data, respectively of the image data, transmitted as differential signals via TMDS channel #2. Then, the recovery/decoder 82C converts the R component, the control bits CTL2 and CTL3, and the auxiliary data, respectively of the image data, from serial data to parallel data, and outputs the parallel data after decoding.

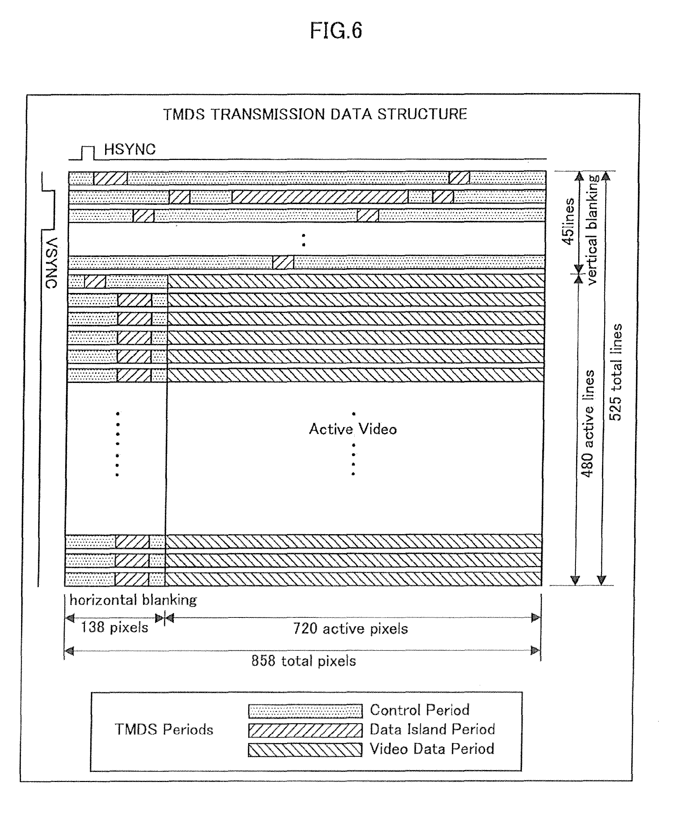

FIG. 6 shows an example of a transmission period (term) during which various transmission data are transmitted via three HDMI TMDS channels #0, #1, and #2. Incidentally, FIG. 6 shows periods for various transmission data where a progressive image of 720x480 pixel in width and height is transmitted via TMDS channels #0, #1, and #2.

In a video field where transmission data is transmitted via the three HDMI TMDS channels #0, #1, and #2, there are three kinds of periods according to the kind of transmission data, namely, a video data period, a data island period, and a control period.

Here, the video field period is a period from a rising edge (active edge) of a vertical synchronizing signal to the rising edge of the next vertical synchronizing signal, and is divided into a horizontal blanking period, a vertical blanking period, and an active video period, which is a period where the horizontal blanking period and the vertical blanking period are excluded from the video field period.

The video data period is assigned to the active video period. Effective pixel (active pixel) data of 720 pixels x 480 lines configuring image data for one uncompressed screen is transmitted in the video data period.

The data island period and the control period are assigned to the horizontal blanking period and the vertical blanking period. Auxiliary data is transmitted in the data island period and the control period.

That is, the data island period is assigned to portions of the horizontal blanking period and the vertical blanking period. Data not relating to control, for example, a packet of audio data, among the auxiliary data, is transmitted in the data island period.

The control period is assigned to the other portions of the horizontal blanking period and the vertical blanking period. Data relating to control, for example, the vertical synchronizing signal, the horizontal synchronizing signal, a control packet, and the like, among the auxiliary data, are transmitted in the control period.

Here, according to the current HDMI, the frequency of the pixel clock transmitted via the TMDS clock channel is 165 MHz, for example, and in this case, the transmission rate in the data island period is about 500 Mbps. In the present embodiment, thumbnail data, which is data of video for index, is transmitted from a video camera recorder 10 to a television receiver 30.

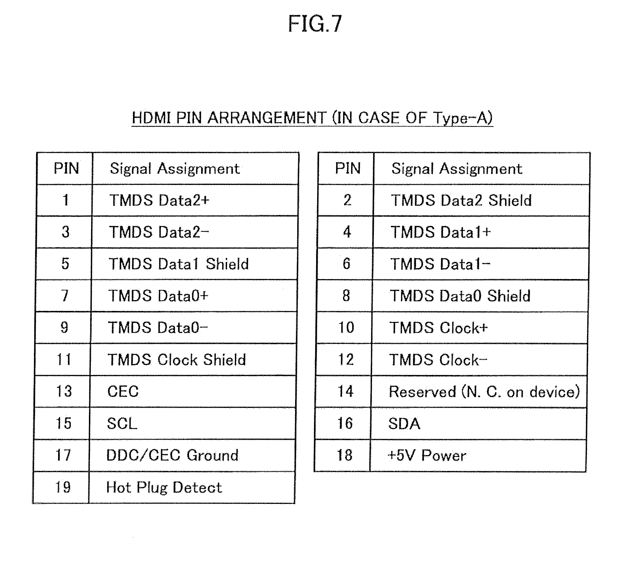

FIG. 7 shows a pin arrangement of HDMI terminals 29 and 31. This pin arrangement is referred to as type-A.

Two lines, which are differential lines through which differential signals TMDS Data #i+ and TMDS Data #i- of a TMDS channel #I are transmitted, are connected to a pin (pin whose pin number is 1, 4, or 7) assigned with TMDS Data #i+ and a pin (pin whose pin number is 3, 6, or 9) assigned with TMDS Data #i-.

Also, the CEC line 84, through which a CEC signal which is data for control is transmitted, is connected to a pin whose pin number is 13, and a pin whose pin number is 14 is a reserved pin. Also, a line, through which a SDA (serial data) signal, such as E-EDID, is transmitted, is connected to a pin whose pin number is 16, and a line, through which a SCL (serial clock) signal which is a clock signal that is used for synchronization at the time of transmission/reception of the SDA signal is transmitted, is connected to a pin whose pin number is 15. The DDC 83 described above is formed from the line through which the SDA signal is transmitted, and the line through which the SCL signal is transmitted.

Also, as described above, the line 86 for the source device to detect the connection of the sink device is connected to a pin whose pin number is 19. Also, as described above, the line 87 for supplying power is connected to a pin whose pin number is 18.

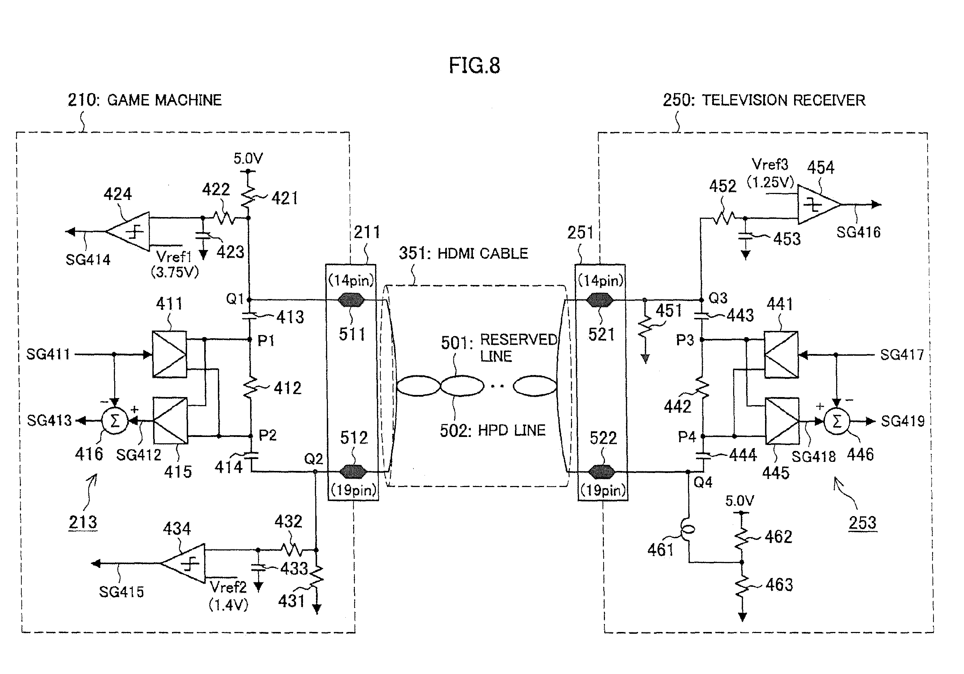

FIG. 8 shows a configuration example of the high-speed data line interface 213 of the game machine 210 and the high-speed data line interface 253 of the television receiver 250. The interfaces 213 and 253 configure a communication section for performing local area network (LAN) communication. The communication section performs communication by using a pair of differential lines among a plurality of lines forming the HDMI cable 351, that is, in the present embodiment, a reserved line (Ether-line) corresponding to the reserved pin (14 pin) and the HPD line (Ether+line) corresponding to the HPD pin (19 pin).

The game machine 210 includes a LAN signal transmitter circuit 411, a terminal resistor 412, AC coupling capacitors 413 and 414, a LAN signal receiver circuit 415, a subtraction circuit 416, a pull-up resistor 421, a resistor 422 and a capacitor 423 forming a low-pass filter, a comparator 424, a pull-down resistor 431, a resistor 432 and a capacitor 433 forming a low-pass filter, and a comparator 434. Here, the high-speed data line interface 213 is configured from the LAN signal transmitter circuit 411, the terminal resistor 412, the AC coupling capacitors 413 and 414, the LAN signal receiver circuit 415, and the subtraction circuit 416.

A series circuit of the pull-up resistor 421, the AC coupling capacitor 413, the terminal resistor 412, the AC coupling capacitor 414 and the pull-down resistor 431 is connected between a power line (+5.0V) and a ground line. A connection point P1 of the AC coupling capacitor 413 and the terminal resistor 412 is connected to the positive output side of the LAN signal transmitter circuit 411, and also to the positive input side of the LAN signal receiver circuit 415. Also, a connection point P2 of the AC coupling capacitor 414 and the terminal resistor 412 is connected to the negative output side of the LAN signal transmitter circuit 411, and also to the negative input side of the LAN signal receiver circuit 415. A transmission signal (transmission data) SG411 is supplied to the input side of the LAN signal transmitter circuit 411.

Also, an output signal SG412 of the LAN signal receiver circuit 415 is supplied to the positive terminal of the subtraction circuit 416, and a transmission signal (transmission data) SG411 is supplied to the negative terminal of the subtraction circuit 416. In the subtraction circuit 416, the transmission signal SG411 is subtracted from the output signal SG412 of the LAN signal receiver circuit 415, and a reception signal (reception data) SG413 is obtained.

Also, a connection point Q1 of the pull-up resistor 421 and the AC coupling capacitor 413 is connected to the ground line through the series circuit of the resistor 422 and the capacitor 423. An output signal of the low-pass filter obtained at the connection point of the resistor 422 and the capacitor 423 is supplied to one of the input terminals of the comparator 424. The comparator 424 compares the output signal of the low-pass filter with a reference voltage Vref1 (+3.75V) supplied to the other input terminal. An output signal SG414 of the comparator 424 is supplied to the CPU 221.

Also, a connection point Q2 of the AC coupling capacitor 414 and the pull-down resistor 431 is connected to the ground line through a series circuit of the resistor 432 and the capacitor 433. An output signal of the low-pass filter obtained at the connection point of the resistor 432 and the capacitor 433 is supplied to one of the input terminals of the comparator 434. The comparator 434 compares the output signal of the low-pass filter with a reference voltage Vref2 (+1.4V) supplied to the other input terminal. An output signal SG415 of the comparator 434 is supplied to the CPU 221.

The television receiver 250 includes a LAN signal transmitter circuit 441, a terminal resistor 442, AC coupling capacitors 443 and 444, a LAN signal receiver circuit 445, a subtraction circuit 446, a pull-down resistor 451, a resistor 452 and a capacitor 453 forming a low-pass filter, a comparator 454, a choke coil 461, a resistor 462, and a resistor 463. Here, the high-speed data line interface 253 is configured from the LAN signal transmitter circuit 441, the terminal resistor 442, the AC coupling capacitors 443 and 444, the LAN signal receiver circuit 445, and the subtraction circuit 446.

A series circuit of the resistor 462 and the resistor 463 is connected between a power line (+5.0V) and a ground line. A series circuit of the choke coil 461, the AC coupling capacitor 444, the terminal resistor 442, the AC coupling capacitor 443 and the pull-down resistor 451 is connected between the connection point of the resistor 462 and the resistor 463 and the ground line.

A connection point P3 of the AC coupling capacitor 443 and the terminal resistor 442 is connected to the positive output side of the LAN signal transmitter circuit 441, and also to the positive input side of the LAN signal receiver circuit 445. Also, a connection point P4 of the AC coupling capacitor 444 and the terminal resistor 442 is connected to the negative output side of the LAN signal transmitter circuit 441, and also to the negative input side of the LAN signal receiver circuit 445. A transmission signal (transmission data) SG417 is supplied to the input side of the LAN signal transmitter circuit 441.

Also, an output signal SG418 of the LAN signal receiver circuit 445 is supplied to the positive terminal of the subtraction circuit 446, and the transmission signal SG417 is supplied to the negative terminal of the subtraction circuit 446. In the subtraction circuit 446, the transmission signal SG417 is subtracted from the output signal SG418 of the LAN signal receiver circuit 445, and a reception signal (reception data) SG419 is obtained.

Also, a connection point Q3 of the pull-down resistor 451 and the AC coupling capacitor 443 is connected to the ground line through a series circuit of the resistor 452 and the capacitor 453. An output signal of the low-pass filter obtained at the connection point of the resistor 452 and the capacitor 453 is supplied to one of the input terminals of the comparator 454. The comparator 454 compares the output signal of the low-pass filter and a reference voltage Vref3 (+1.25V) supplied to the other input terminal. An output signal SG416 of the comparator 454 is supplied to the CPU 271.

A reserved line 501 and a HPD line 502 included in the HDMI cable 351 form a differential twisted pair. A source-side end 511 of the reserved line 501 is connected to 14 pin of the HDMI terminal 211, and a sink-side end 521 of the reserved line 501 is connected to 14 pin of the HDMI terminal 251. Also, a source-side end 512 of the HPD line 502 is connected to 19 pin of the HDMI terminal 211, and a sink-side end 522 of the HPD line 502 is connected to 19 pin of the HDMI terminal 251.

In the game machine 210, the connection point Q1 of the pull-up resistor 421 and the AC coupling capacitor 413 described above is connected to 14 pin of the HDMI terminal 211, and the connection point Q2 of the pull-down resistor 431 and the AC coupling capacitor 414 is connected to 19 pin of the HDMI terminal 211. On the other hand, in the television receiver 250, the connection point Q3 of the pull-down resistor 451 and the AC coupling capacitor 443 described above is connected to 14 pin of the HDMI terminal 251, and the connection point Q4 of the choke coil 461 and the AC coupling capacitor 444 described above is connected to 19 pin of the HDMI terminal 251.

Next, an operation for LAN communication by the high-speed data line interfaces 213 and 253 configured in the above-described manner will be described.

In the game machine 210, the transmission signal (transmission data) SG411 is supplied to the input side of the LAN signal transmitter circuit 411, and differential signals (positive output signal, negative output signal) corresponding to the transmission signal SG411 are outputted from the LAN signal transmitter circuit 411. Then, the differential signals outputted from the LAN signal transmitter circuit 411 are supplied to the connection points P1 and P2, and are transmitted to the television receiver 250 through a pair of lines (reserved line 501, HPD line 502) of the HDMI cable 351.

Also, in the television receiver 250, the transmission signal (transmission data) SG417 is supplied to the input side of the LAN signal transmitter circuit 441, and differential signals (positive output signal, negative output signal) corresponding to the transmission signal SG417 are outputted from the LAN signal transmitter circuit 441. Then, the differential signals outputted from the LAN signal transmitter circuit 441 are supplied to the connection points P3 and P4, and are transmitted to the game machine 210 through a pair of lines (reserved line 501, HPD line 502) of the HDMI cable 351.

Also, in the game machine 210, since the input side of the LAN signal receiver circuit 415 is connected to the connection points P1 and P2, an added signal of a transmission signal corresponding to the differential signal (current signal) outputted from the LAN signal transmitter circuit 411 and a reception signal corresponding to the differential signal transmitted from the television receiver 250 as described above can be obtained as the output signal SG412 of the LAN signal receiver circuit 415. The subtraction circuit 416 subtracts the transmission signal SG411 from the output signal SG412 of the LAN signal receiver circuit 415. Thus, an output signal SG413 of the subtraction circuit 416 corresponds to the transmission signal (transmission data) SG417 of the television receiver 250.

Also, in the television receiver 250, since the input side of the LAN signal receiver circuit 445 is connected to the connection points P3 and P4, an added signal of a transmission signal corresponding to the differential signal (current signal) outputted from the LAN signal transmitter circuit 441 and a reception signal corresponding to the differential signal transmitted from the game machine 210 as described above can be obtained as the output signal SG418 of the LAN signal receiver circuit 445. The subtraction circuit 446 subtracts the transmission signal SG417 from the output signal SG418 of the LAN signal receiver circuit 445. Thus, an output signal SG419 of the subtraction circuit 446 corresponds to the transmission signal (transmission data) SG411 of the game machine 210.

In this manner, bidirectional LAN communication can be performed between the high-speed data line interface 213 of the game machine 210 and the high-speed data line interface 253 of the television receiver 250.

Incidentally, in FIG. 8, in addition to the LAN communication described above, the HPD line 502 notifies the game machine 210, via the DC bias level, of the connecting of the HDMI cable 351 to the television receiver 250. That is, at the time of the connection of the HDMI cable 351 to the television receiver 250, the resistors 462 and 463, and the choke coil 461 in the television receiver 250 bias the HPD line 502 to about 4V through 19 pin of the HDMI terminal 251. The game machine 210 extracts the DC bias of the HPD line 502 by the low-pass filter formed from the resistor 432 and the capacitor 433, and compares the DC bias with the reference voltage Vref2 (for example, 1.4V) by the comparator 434.

If the HDMI cable 351 is not connected to the television receiver 250, since there is the pull-down resistor 431, the voltage at 19 pin of the HDMI terminal 211 becomes lower than the reference voltage Vref2. On the contrary, if the HDMI cable 351 is connected to the television receiver 250, the voltage at 19 pin of the HDMI terminal 211 becomes higher than the reference voltage Vref2. Accordingly, the output signal SG415 of the comparator 434 becomes high level when the HDMI cable 351 is connected to the television receiver 250. Otherwise, the output signal SG415 of the comparator 434 becomes low level. Thereby, based on the output signal SG415 of the comparator 434, the CPU 221 of the game machine 210 can identify whether the HDMI cable 351 is connected to the television receiver 250 or not.

Also, in FIG. 8, the devices connected to both ends of the HDMI cable 351 have a function of mutually identifying, by a DC bias potential of the reserved line 501, whether the devices are devices capable of LAN communication (hereinafter referred to as "e-HDMI compatible device") or devices incapable of LAN communication (hereinafter referred to as "e-HDMI non-compatible device").

As described above, the game machine 210 pulls up (+5V) the reserved line 501 by the resistor 421, and the television receiver 250 pulls down the reserved line 501 by the resistor 451. The resistors 421 and 451 do not exist in an e-HDMI non-compatible device.

As described above, the game machine 210 compares, by the comparator 424, the DC potential of the reserved line 501 that passed through the low-pass filter formed from the resistor 422 and the capacitor 423 with the reference voltage Vref1. When the television receiver 250 is an e-HDMI compatible device and includes the pull-down resistor 451, the voltage of the reserved line 501 becomes 2.5V. However, if the television receiver 250 is an e-HDMI non-compatible device and does not include the pull-down resistor 451, the voltage of the reserved line 501 becomes 5V due to the presence of the pull-up resistor 421.

Thus, with the reference voltage Vref1 being 3.75V, for example, the output signal SG414 of the comparator 424 becomes low level when the television receiver 250 is an e-HDMI compatible device. Otherwise, the output signal SG414 of the comparator 424 becomes high level. Thereby, based on the output signal SG414 of the comparator 424, the CPU 221 of the game machine 210 can identify whether the television receiver 250 is an e-HDMI compatible device or not.

Similarly, as described above, the television receiver 250 compares, by the comparator 454, the DC potential of the reserved line 501 that passed through the low-pass filter formed from the resistor 452 and the capacitor 453 with the reference voltage Vref3. When the game machine 210 is an e-HDMI compatible device and includes the pull-up resistor 421, the voltage of the reserved line becomes 2.5V. However, if the game machine 210 is an e-HDMI non-compatible device and does not include the pull-up resistor 421, the voltage of the reserved line 501 becomes 0V due to the presence of the pull-down resistor 451.

Thus, with the reference voltage Vref3 being 1.25V, for example, the output signal SG416 of the comparator 454 becomes high level when the game machine 210 is an e-HDMI compatible device. Otherwise, the output signal SG416 of the comparator 454 becomes low level. Thereby, based on the output signal SG416 of the comparator 454, the CPU 271 of the television receiver 250 can identify whether the game machine 210 is an e-HDMI compatible device or not.

According to the configuration example shown in FIG. 8, with an interface performing, by one HDMI cable 351, video and audio data transmission; communication of exchange and authentication of connected device information, and device control data; and LAN communication; since the LAN communication is performed as bidirectional communication through a pair of differential transmission lines and connection status of the interface is notified by a DC bias potential of at least one of the transmission lines, spatial separation that a SCL line and a SDA line are physically not used in the LAN communication can be achieved. As a result, due to the dividing, a circuit for the LAN communication can be configured regardless of electrical specifications specified for DDC, and a steady and reliable LAN communication can be achieved at a low cost.

Next, a concrete example of additional-value image data transmitted, with respect to the AV system 200 shown in FIG. 1, from the game machine 210 to the television receiver 250 at the time of playing a game or viewing a movie will be described.

### (1) Grain Noise (Film Noise) Addition

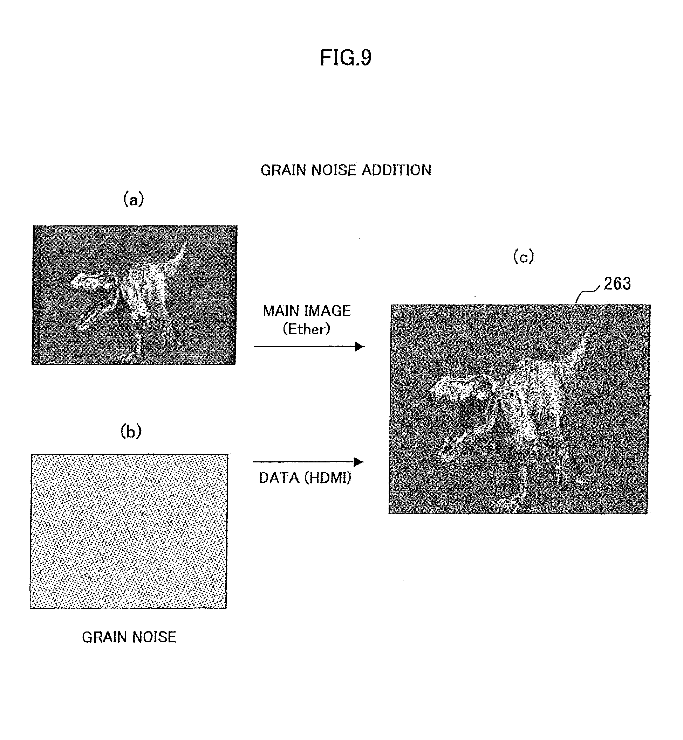

As shown in FIG. 9, grain noise data is transmitted as the additional-value image data from the game machine 210 to the television receiver 250. In this case, main image data (MPEG data) shown in (a) of FIG. 9 is transmitted from the game machine 210 to the television receiver 250 in an Ethernet IP packet by using a high-speed data line. Also, grain noise data (baseband) shown in (b) of FIG. 9 is transmitted from the game machine 210 to the television receiver 250 by using an HDMI TMDS channel.

In the combining section 268 of the television receiver 250, combined image data is generated with the grain noise data being added to the main image data, and an image to which the grain noise (film noise) is added is displayed on the display panel 263 as shown in (c) of FIG. 9.

Incidentally, regarding the grain noise (film noise), there are noises suitable for different display panels. Accordingly, in the AV system 200 shown in FIG. 1, the game machine 210 obtains information of the display panel 263 of the television receiver 250 from E-EDID information read out from the television receiver 250 by using an HDMI DDC channel. Furthermore, the game machine 210 connects to the Internet to obtain more detailed information of the display panel 263 as necessary.

The grain noise is highly a matter of personal preference and is dependent on the content, and in many cases, it is controlled according to a scene, thus being suitable for software processing. Accordingly, as described above, the grain noise data is preferably generated at the game machine 210 side and transmitted to the television receiver 250. On the other hand, a decoding process for the main image data is determined by a standard, and thus, the main image data is suitable for hardware (firmware) processing, and as described above, according to a configuration where the main image data in an encoded state is transmitted from the game machine 210 to the television receiver 250 through the high-speed data line, the resources of the television receiver 250 can be effectively used.

### (2) Conversion to High Resolution

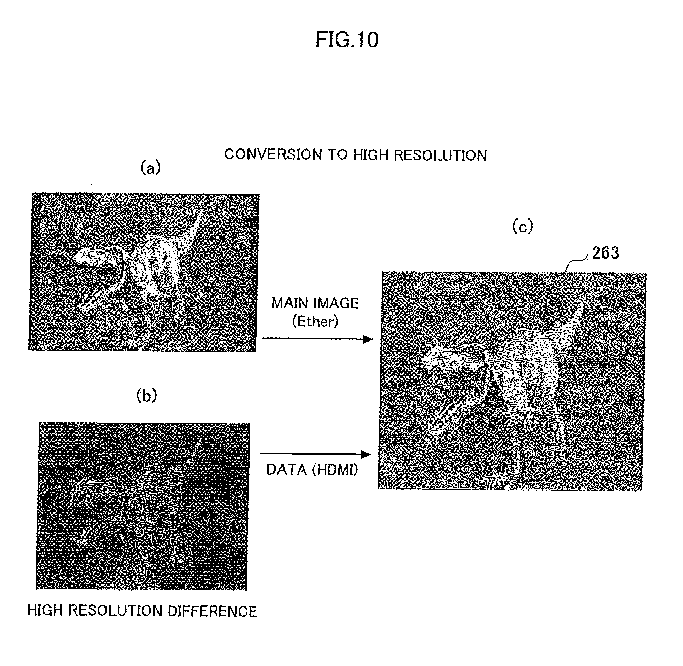

As shown in FIG. 10, high resolution difference data is transmitted as the additional-value image data from the game machine 210 to the television receiver 250. In this case, main image data (MPEG data) shown in (a) of FIG. 10 is transmitted from the game machine 210 to the television receiver 250 in an Ethernet IP packet by using a high-speed data line. Also, high resolution difference data (baseband) shown in (b) of FIG. 10 is transmitted from the game machine 210 to the television receiver 250 by using an HDMI TMDS channel.

In the combining section 268 of the television receiver 250, combined image data is generated with the high resolution difference data being added to the main image data, and a high-resolution converted image is displayed on the display panel 263 as shown in (c) of FIG. 10.

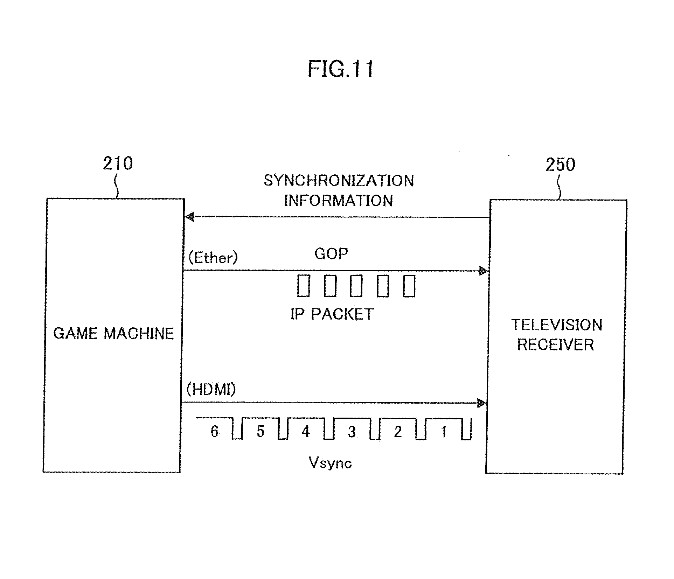

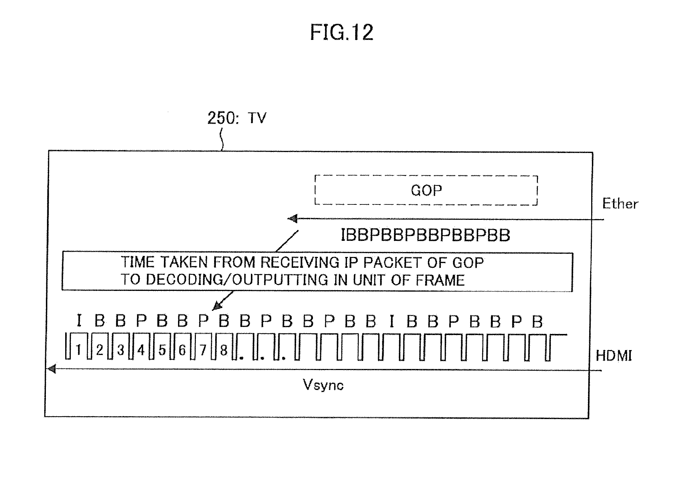

Incidentally, when adding the high resolution difference data to the main image data, synchronization needs to be performed. As shown in FIG. 11, the game machine 210 obtains, for the synchronization, synchronization information from the television receiver 250 in advance by using the high-speed data line or a CEC line. As shown in FIG. 12, in the television receiver 250, the synchronization information is information indicating a lag between a timing of image display based on image data (MPEG data) transmitted in an Ethernet IP packet through a high-speed data line and a timing of image display based on image data (baseband data) transmitted through an HDMI TMDS channel. The lag is the time taken by the television receiver 250 from receiving and decoding an IP packet of a Group of Picture (GOP) to outputting the same in a unit of frame.

The game machine 210 adjusts the transmission timings of the main image data and the high resolution difference data based on the above-described synchronization information, so that the timings of both image data are matched when being combined by the television receiver 250.

Information processing amount is large for the high resolution difference data, and also, the high resolution difference data needs to be added in a concentrated manner according to a scene, and thus, is suitable for software processing. Accordingly, as described above, the high resolution difference data is preferably generated at the game machine 210 side and transmitted to the television receiver 250.

### (3) Conversion to High Luminance

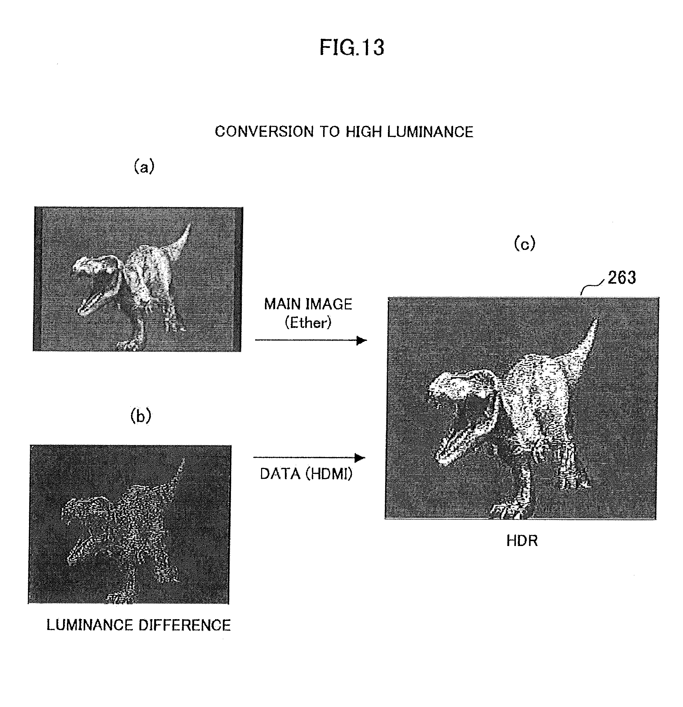

As shown in FIG. 13, luminance difference data is transmitted as the additional-value image data from the game machine 210 to the television receiver 250. In this case, main image data (MPEG data) shown in (a) of FIG. 13 is transmitted from the game machine 210 to the television receiver 250 in an Ethernet IP packet by using a high-speed data line. Also, luminance difference data (baseband) shown in (b) of FIG. 13 is transmitted from the game machine 210 to the television receiver 250 by using an HDMI TMDS channel.

In the combining section 268 of the television receiver 250, combined image data is generated with the luminance difference data being added to the main image data, and a high-luminance (HDR: High Dynamic Range) converted image is displayed on the display panel 263 as shown in (c) of FIG. 13.

In this case, the game machine 210 can generate luminance difference data suitable for a display panel based on panel information obtained from the television receiver 250. Also in this case, as in the case of the conversion to high resolution as described above, the game machines 210 adjusts the transmission timings of the main image data and the luminance difference data based on synchronization information supplied from the television receiver 250, so that the timings of both image data are matched when being combined by the television receiver 250.

Incidentally, when the display panel 263 includes a back panel illumination where light-emitting diodes are two-dimensionally arranged, high luminance can also be achieved not by adding the above-described luminance difference data to the main image data by the combining section 268, but by controlling the back panel illumination based on the luminance difference data. The control of the back panel illumination can be realized only when the luminance difference data is transmitted separately from the main image data.

### (4) Conversion to High Frame Rate

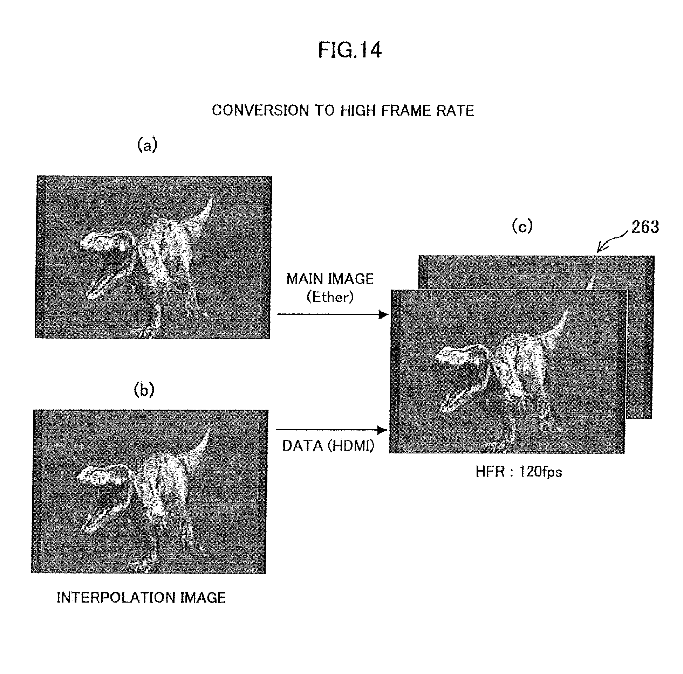

As shown in FIG. 14, interpolation image data to be interpolated between frames of the main image data is transmitted as the additional-value image data from the game machine 210 to the television receiver 250. In this case, main image data (MPEG data) of 60 fps shown in (a) of FIG. 14 is transmitted from the game machine 210 to the television receiver 250 in an Ethernet IP packet by using a high-speed data line. Also, baseband interpolation image data (60 fps) shown in (b) of FIG. 14 is transmitted from the game machine 210 to the television receiver 250 by using an HDMI TMDS channel.

In the combining section 268 of the television receiver 250, combined image data is generated with the interpolation image data being inserted between frames of the main image data, and a high frame rate (HFR) converted image of 120 fps is displayed on the display panel 263 as shown in (c) of FIG. 14.

Also in this case, as in the case of the conversion to high resolution as described above, the game machine 210 adjusts the transmission timings of the main image data and the interpolation image data based on synchronization information supplied from the television receiver 250, so that the timings of both image data are matched when being combined by the television receiver 250.

### (5) Stereo Display

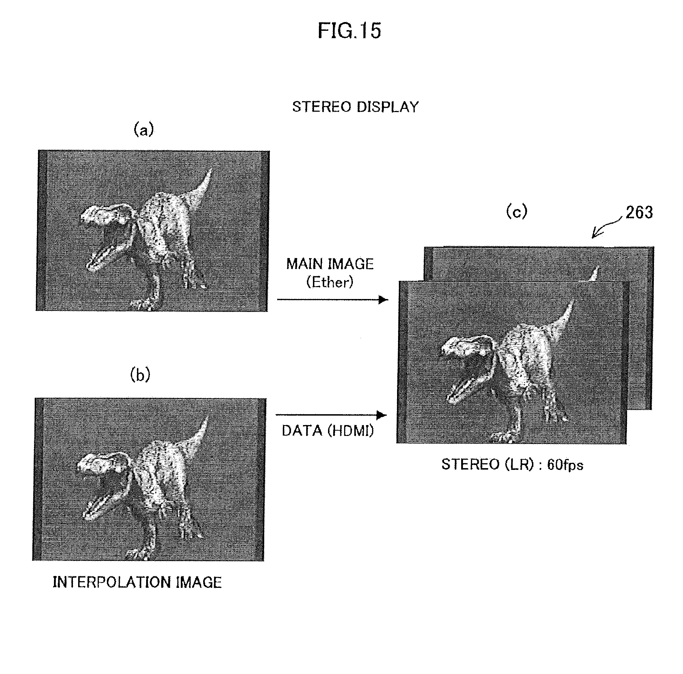

As shown in FIG. 15, when main image data is image data for a left eye, image data for a right eye is transmitted as the additional-value image data from the game machine 210 to the television receiver 250, and when the main image data is the image data for a right eye, the image data for a left eye is transmitted as the additional-value image data. In this case, main image data (MPEG data for a left eye or a right eye) shown in (a) of FIG. 15 is transmitted from the game machine 210 to the television receiver 250 in an Ethernet IP packet by using a high-speed data line. Also, baseband interpolation image data (for a right eye or a left eye) shown in (b) of FIG. 15 is transmitted from the game machine 210 to the television receiver 250 by using an HDMI TMDS channel.

In the combining section 268 of the television receiver 250, combined image data is generated with the interpolation image data being inserted between frames of the main image data, and an image for a left eye and an image for a right eye are alternately displayed on the display panel 263 as shown in (c) of FIG. 15 to achieve a stereo display.

Also in this case, as in the case of the conversion to high resolution as described above, the game machine 210 adjusts the transmission timings of the main image data and the interpolation image data based on synchronization information supplied from the television receiver 250, so that the timings of both image data are matched when being combined by the television receiver 250.

### (6) Interface Screen (XMB)

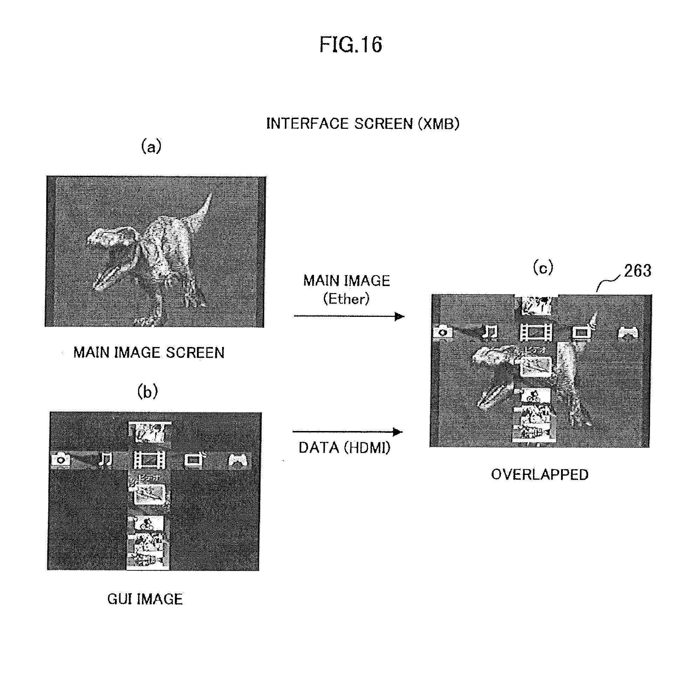

As shown in FIG. 16, image data for interface screen is transmitted as the additional-value image data from the game machine 210 to the television receiver 250. In this case, main image data shown in (a) of FIG. 16 is transmitted from the game machine 210 to the television receiver 250 in an Ethernet IP packet by using a high-speed data line. Also, image data (baseband) for interface screen shown in (b) of FIG. 16 is transmitted from the game machine 210 to the television receiver 250 by using an HDMI TMDS channel.

In the combining section 268 of the television receiver 250, combined image data is generated with the image data for interface screen being superimposed on the main image data, and, as shown in (c) of FIG. 16, an interface screen is displayed, being overlapped with the main image, on the display panel 263. The example shown in FIG. 16 is an example where Cross Media Bar (XMB) is displayed, as the interface screen, on the main image.

Cross Media Bar is a Graphical User Interface (GUI) enabling a comfortable operation of multi-channels/multi-functions of a digital broadcast and an externally connected device (see JP-A-2004-356774). According to Cross Media Bar, categories (video, music, and the like) are displayed horizontally, and contents (items) are displayed vertically. When scrolling through icons with a remote control, a target program and video (content) of a connected device are swiftly displayed. Incidentally, "Cross Media Bar" and "XMB" are registered trademarks.

### (7) Interface Screen (Operation Screen)

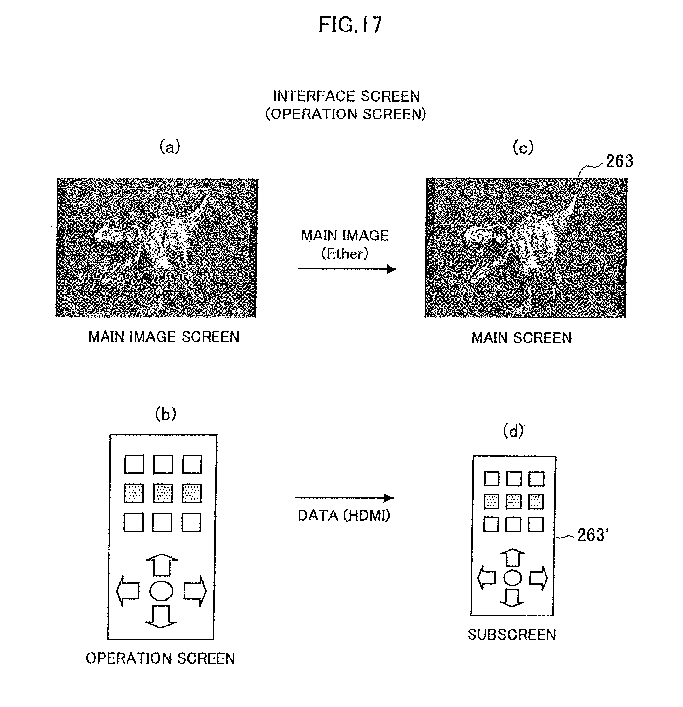

As shown in FIG. 17, image data for interface screen is transmitted as the additional-value image data from the game machine 210 to the television receiver 250. In this case, main image data (MPEG data) shown in (a) of FIG. 17 is transmitted from the game machine 210 to the television receiver 250 in an Ethernet IP packet by using a high-speed data line. Also, image data (baseband) for interface screen shown in (b) of FIG. 17 is transmitted from the game machine 210 to the television receiver 250 by using an HDMI TMDS channel.

In the television receiver 250, a main image (main screen) is displayed on the display panel 263 as shown in (c) of FIG. 17, and an operation screen (subscreen) is displayed, as shown in (d) of FIG. 17, on another display panel provided separately from the display panel 263, for example, a display panel 263' of a remote control transmitter connected in a wired or a wireless manner to the television receiver 250.

Also in this case, the image data for interface screen is transmitted from the game machine 210 to the television receiver 250 by using an HDMI TMDS channel, and a rich, low-latency GUI, without an encoding process of the game machine 210 and a decoding process of the television receiver 250, can be provided.

As described above, the AV system 200 as shown in FIG. 1 is configured to transmit the additional-value image data (second image data) from the game machine 210 to the television receiver 250 separately from the main image data (first image data) and to use the additional-value image data. Thus, image processing resources of the game machine 210 can be used effectively to obtain the additional-value image data. Also, an additional value exceeding the standard can also be achieved without being limited by the bandwidth or the like of the transmission line. Accordingly, in the AV system 200 as shown in FIG. 1, a favorable display of additional-value added image can be performed.

Incidentally, in the above-described embodiment, although the main image data (MPEG data) is transmitted in an Ethernet IP packet by using a high-speed data line and the additional-value image data (baseband) is transmitted by using an HDMI TMDS channel, the reverse is also conceivable. That is, the main image data (baseband) is transmitted by using the TMDS channel and the additional-value image data (MPEG data) is transmitted in an Ethernet IP packet by using the high-speed data line.

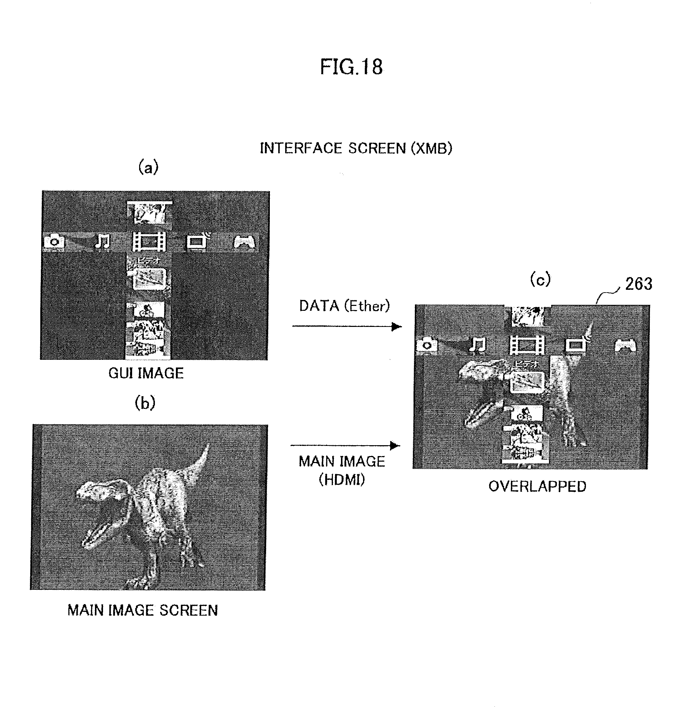

FIG. 18 shows an example where image data for interface screen is transmitted as the additional-value image data from the game machine 210 to the television receiver 250. In this case, the image data (MPEG data) for interface screen shown in (a) of FIG. 18 is transmitted from the game machine 210 to the television receiver 250 in an Ethernet IP packet by using a high-speed data line. Also, main image data (baseband) shown in (b) of FIG. 18 is transmitted from the game machine 210 to the television receiver 250 by using an HDMI TMDS channel.

In the combining section 268 of the television receiver 250, combined image data is generated with the image data for interface screen being superimposed on the main image data, and as shown in (c) of FIG. 18, an interface screen is displayed, being overlapped with the main image, on the display panel 263.

Also in this case, a low-latency GUI can be provided by adopting a low latency codec (LLVC or the like) as the codec for the image data for interface screen.

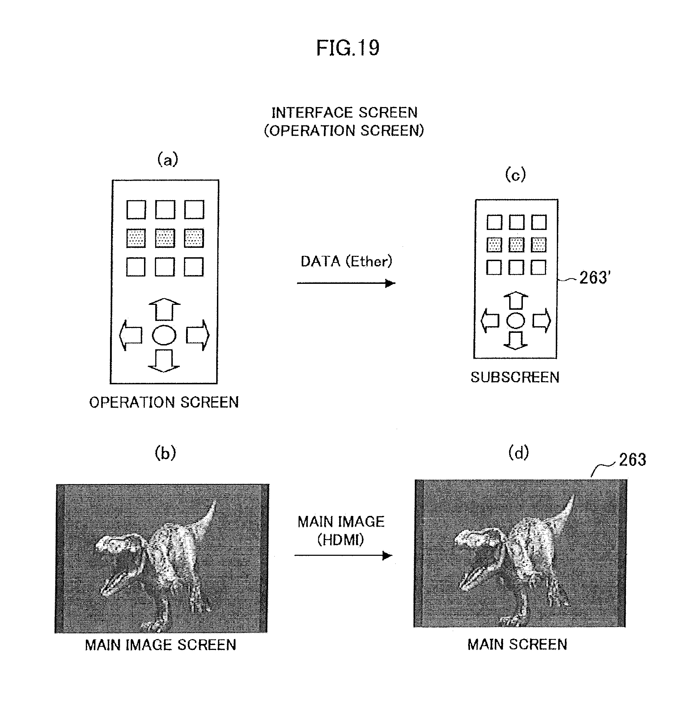

Also, FIG. 19 shows an example where image data for interface screen is transmitted as the additional-value image data from the game machine 210 to the television receiver 250. In this case, image data (MPEG data) for interface screen shown in (a) of FIG. 19 is transmitted from the game machine 210 to the television receiver 250 in an Ethernet IP packet by using a high-speed data line. Also, main image data (baseband) shown in (b) of FIG. 19 is transmitted from the game machine 210 to the television receiver 250 by using an HDMI TMDS channel.

In the television receiver 250, an operation screen (subscreen) is displayed, as shown in (c) of FIG. 19, on another display panel provided separately from the display panel 263, for example, a display panel 263' of a remote control transmitter connected in a wired or a wireless manner to the television receiver 250, and the main image (main screen) is displayed as shown in (d) of FIG. 19 on the display panel 263.

Also in this case, a low-latency GUI can be provided by adopting a low latency codec (LLVC or the like) as the codec for the image data for interface screen.

Also, in the above-described embodiment, an example is shown where the main image data is transmitted from the game machine 210 to the television receiver 250. However, where the main image data is already present in the television receiver 250, the main image data need not be transmitted from the game machine 210 to the television receiver 250. A case where the main image data is present in the television receiver 250 is, for example, a case where image data of a predetermined program received by the television receiver 250 is made to be the main image data and the image data is transmitted to the game machine 210 through a high-speed data line, and then the game machine 210 generates additional-value image data based on the main image data.

Incidentally, in the AV system 200 as shown in FIG. 1, a communication section performing bidirectional communication is shown to be configured from the reserved line (Ether-line) and the HPD line (Ether+line) of the HDMI cable 351. However, the configuration of the communication section performing bidirectional communication is not limited to such. Another configuration example will be described below. In the following example, an explanation will be made with the game machine 210 as the source device and the television receiver 250 as the sink device.

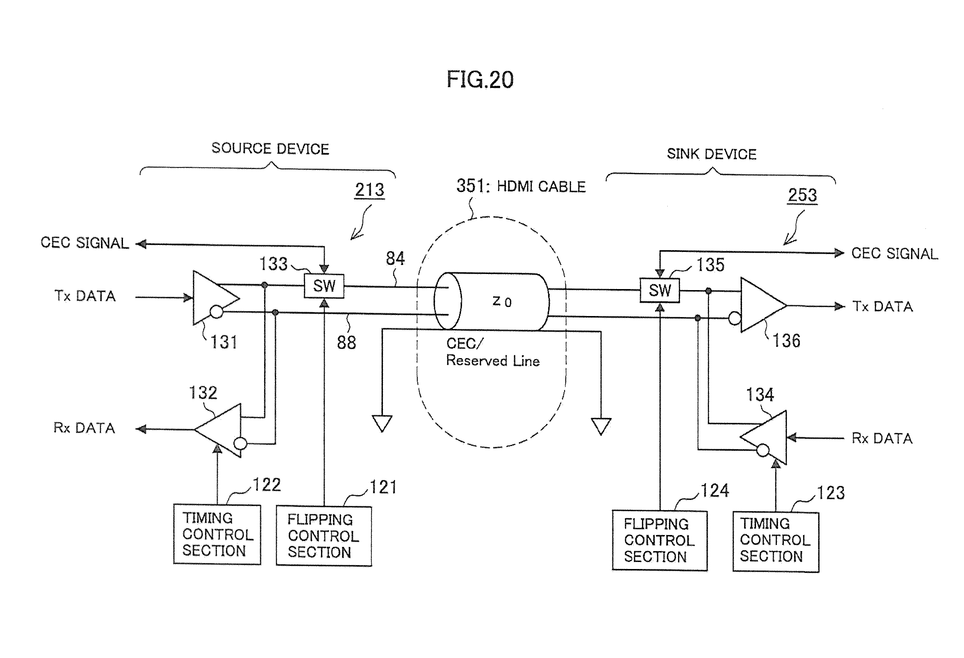

FIG. 20 shows an example where IP communication according to a half-duplex communication scheme is performed by using the CEC line 84 and the reserved line 88. Incidentally, in FIG. 20, sections corresponding to those in FIG. 4 are denoted with the same reference numerals, and the explanations thereof will be omitted as appropriate.

The high-speed data line interface 213 of the source device includes a converting section 131, a decoding section 132, a switch 133, a flipping control section 121, and a timing control section 122. The converting section 131 is supplied with Tx data, which is data transmitted from the source device to the sink device by bidirectional IP communication between the source device and the sink device.

The converting section 131 is configured from a differential amplifier, for example, and converts the supplied Tx data to a differential signal formed from two sub-signals. Also, the converting section 131 transmits the differential signal obtained by the conversion to the sink device through the CEC line 84 and the reserved line 88. That is, the converting section 131 supplies one of the sub-signals forming the differential signal obtained by the conversion to the switch 133 through the CEC line 84, which is, more particularly, a signal line provided in the source device, the signal line being connected to the CEC line 84 of the HDMI cable 351, and supplies the other sub-signal forming the differential signal to the sink device through the reserved line 88, which is, more particularly, a signal line provided in the source device, the signal line being connected to the reserved line 88 of the HDMI cable 351, and the reserved line 88.

The decoding section 132 is configured from a differential amplifier, for example, and its input terminals are connected to the CEC line 84 and the reserved line 88. The decoding section 132 receives, based on the control by the timing control section 122, a differential signal transmitted from the sink device through the CEC line 84 and the reserved line 88, that is, a differential signal formed from the sub-signal on the CEC line 84 and the sub-signal on the reserved line 88, decodes the differential signal to Rx data which is the original data, and outputs the Rx data. Here, the Rx data is data transmitted from the sink device to the source device by bidirectional IP communication between the source device and the sink device.

The switch 133 is supplied, at the time of data transmission, with a CEC signal from a control section (CPU) of the source device or the sub-signal forming the differential signal corresponding to the Tx data from the converting section 131, and is supplied, at the time of data reception, with a CEC signal from the sink device, or the sub-signal forming the differential signal corresponding to the Rx data from the sink device. Based on the control by the flipping control sections 121, the switch 133 selects the CEC signal from the control section (CPU) or the CEC signal from the sink device, or the sub-signal forming the differential signal corresponding to the Tx data or the sub-signal forming the differential signal corresponding to the Rx data, and outputs the selected CEC signal or the sub-signal.

That is, at the time of the source device transmitting data to the sink device, the switch 133 selects either the CEC signal supplied from the control section (CPU) or the sub-signal supplied from the converting section 131, and transmits the CEC signal or the sub-signal selected to the sink device through the CEC line 84.

Also, at the time of the source device receiving the data transmitted from the sink device, the switch 133 receives the CEC signal transmitted from the sink device through the CEC line 84 or the sub-signal of the differential signal corresponding to the Rx data, and supplies the CEC signal or the sub-signal received to the control section (CPU) or the decoding section 132.

The flipping control section 121 flips the switch 133, by controlling the switch 133, so that either of the signals supplied to the switch 133 is selected. The timing control section 122 controls the timing of reception of the differential signal by the decoding section 132.

Also, the high-speed data line interface 253 of the sink device includes a converting section 134, a decoding section 136, a switch 135, a flipping control section 124, and a timing control section 123. The converting section 134 is configured from a differential amplifier, for example, and the Rx data is supplied to the converting section 134. Based on the control by the timing control section 123, the converting section 134 converts the supplied Rx data to a differential signal formed from two sub-signals, and transmits the differential signal obtained by the conversion to the source device through the CEC line 84 and the reserved line 88.

That is, the converting section 134 supplies one of the sub-signals forming the differential signal obtained by the conversion to the switch 135 through the CEC line 84, which is, more particularly, a signal line provided in the sink device, the signal line being connected to the CEC line 84 of the HDMI cable 351, and supplies the other sub-signal forming the differential signal to the source device through the reserved line 88, which is, more particularly, a signal line provided in the sink device, the signal line being connected to the reserved line 88 of the HDMI cable 351, and the reserved line 88.

The switch 135 is supplied, at the time of data reception, with a CEC signal from the source device or a sub-signal forming the differential signal corresponding to the Tx data from the source device, and is supplied, at the time of data transmission, with the sub-signal forming the differential signal corresponding to the Rx data from the converting section 134 or a CEC signal from the control section (CPU) of the sink device. Based on the control by the flipping control section 124, the switch 135 selects the CEC signal from the source device or the CEC signal from the control section (CPU), or the sub-signal forming the differential signal corresponding to the Tx data or the sub-signal forming the differential signal corresponding to the Rx data, and outputs the same.

That is, at the time of the sink device transmitting data to the source device, the switch 135 selects either the CEC signal supplied from the control section (CPU) of the sink device or the sub-signal supplied from the converting section 134, and transmits the CEC signal or the sub-signal selected to the source device through the CEC line 84.

Also, at the time of the sink device receiving the data transmitted from the source device, the switch 135 receives the CEC signal supplied from the source device through the CEC line 84 or the sub-signal of the differential signal corresponding to the Tx data, and supplies the CEC signal or the sub-signal received to the control section (CPU) or the decoding section 136.

The decoding section 136 is configured from a differential amplifier, for example, and its input terminals are connected to the CEC line 84 and the reserved line 88. The decoding section 136 receives the differential signal transmitted from the source device through the CEC line 84 and the reserved line 88, that is, a differential signal formed from the sub-signal on the CEC line 84 and the sub-signal on the reserved line 88, decodes the differential signal to Tx data which is the original data, and outputs the Tx data.

The flipping control section 124 flips the switch 135, by controlling the switch 135, so that either of the signals supplied to the switch 135 is selected. The timing control section 123 controls the timing of transmission of the differential signal by the converting section 134.

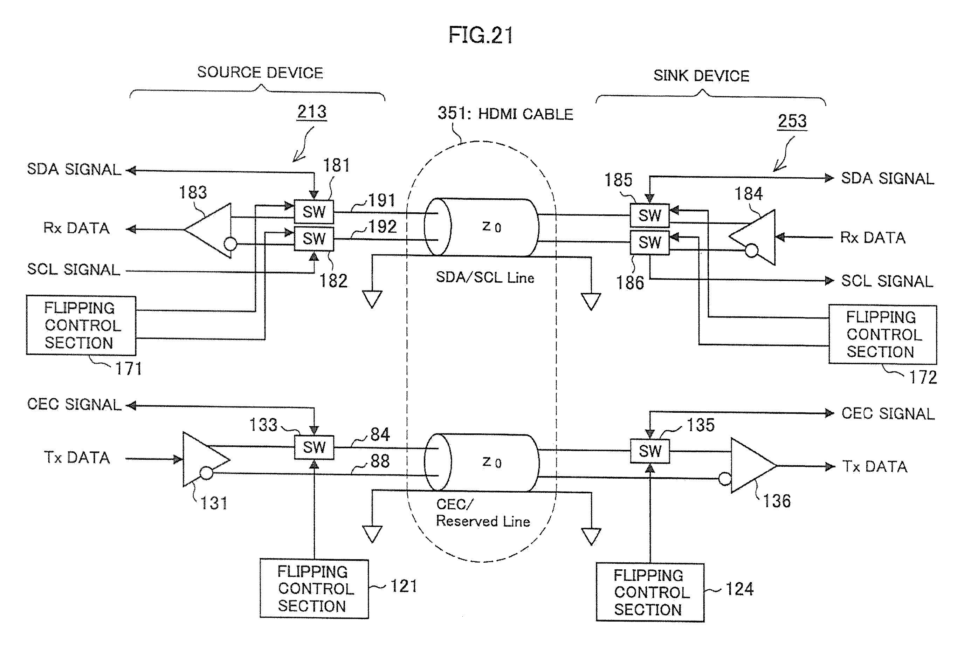

FIG. 21 shows an example where IP communication according to a full-duplex communication scheme is performed by using the CEC line 84 and the reserved line 88 as well as a signal line (SDA line) through which a SDA signal is transmitted and a signal line (SCL line) through which a SCL signal is transmitted. Incidentally, in FIG. 21, sections corresponding to those in FIG. 20 are denoted with the same reference numerals, and the explanations thereof will be omitted as appropriate.

The high-speed data line interface 213 of the source device includes the converting section 131, the switch 133, a switch 181, a switch 182, a decoding section 183, the flipping control section 121, and a flipping control section 171.

The switch 181 is supplied, at the time of data transmission, with a SDA signal from the control section (CPU) of the source device, and is supplied, at the time of data reception, with a SDA signal from the sink device, or the sub-signal forming the differential signal corresponding to the Rx data from the sink device. Based on the control by the flipping control section 171, the switch 181 selects the SDA signal from the control section (CPU) or the SDA signal from the sink device, or the sub-signal forming the differential signal corresponding to the Rx data, and outputs the same.

That is, at the time of the source device receiving data transmitted from the sink device, the switch 181 receives the SDA signal transmitted from the sink device through a SDA line 191 which is the signal line through which the SDA signal is transmitted, or the sub-signal of the differential signal corresponding to the Rx data, and supplies the SDA signal or the sub-signal received to the control section (CPU) or the decoding section 183.

Also, at the time of the source device transmitting data to the sink device, the switch 181 transmits the SDA signal supplied from the control section (CPU) to the sink device through the SDA line 191, or transmits nothing to the sink device.

The switch 182 is supplied, at the time of data transmission, with a SCL signal from the control section (CPU) of the source device, and is supplied, at the time of data reception, with the sub-signal forming the differential signal corresponding to the Rx data from the sink device. Based on the control by the flipping control section 171, the switch 182 selects either the SCL signal or the sub-signal forming the differential signal corresponding to the Rx data, and outputs the selected sub-signal.

That is, at the time of the source device receiving data transmitted from the sink device, the switch 182 receives the sub-signal of the differential signal corresponding to the Rx data transmitted from the sink device through a SCL line 192, which is a signal line through which the SCL signal is transmitted, and supplies the received sub-signal to the decoding section 183, or receives nothing.

Also, at the time of the source device transmitting data to the sink device, the switch 182 transmits the SCL signal supplied from the control section (CPU) of the source device to the sink device through the SCL line 192, or transmits nothing.

The decoding section 183 is configured from a differential amplifier, for example, and its input terminals are connected to the SDA line 191 and the SCL line 192. The decoding section 183 receives the differential signal transmitted from the sink device through the SDA line 191 and the SCL line 192, that is, the differential signal formed from the sub-signal on the SDA line 191 and the sub-signal on the SCL line 192, decodes the differential signal to Rx data which is the original data, and outputs the Rx data.

With respect to the respective switch 181 and switch 182, the flipping control section 171 flips the switch 181 and the switch 182, by controlling the switch 181 and the switch 182, so that either of the signals to be supplied is selected.

Also, the high-speed data line interface 253 configuring the sink device includes a converting section 184, the switch 135, a switch 185, a switch 186, the decoding section 136, a flipping control section 172, and the flipping control section 124.

The converting section 184 is configured from a differential amplifier, for example, and Rx data is supplied to the converting section 184. The converting section 184 converts the supplied Rx data to a differential signal formed from two sub-signals, and transmits the differential signal obtained by the conversion to the source device through the SDA line 191 and the SCL line 192. That is, the converting section 184 transmits one of the sub-signals forming the differential signal obtained by the conversion to the source device through the switch 185, and transmits the other sub-signal forming the differential signal to the source device through the switch 186.

The switch 185 is supplied, at the time of data transmission, with the sub-signal forming the differential signal corresponding to the Rx data from the converting section 184 or a SDA signal from the control section (CPU) of the sink device, and is supplied, at the time of data reception, a SDA signal from the source device. Based on the control by the flipping control section 172, the switch 185 selects the SDA signal from the control section (CPU) or the SDA signal from the source device, or the sub-signal forming the differential signal corresponding to the Rx data, and outputs the same.

That is, at the time of the sink device receiving data transmitted from the source device, the switch 185 receives the SDA signal transmitted from the source device through the SDA line 191 and supplies the received SDA signal to the control section (CPU), or transmits nothing.

Also, at the time of the sink device transmitting data to the source device, the switch 185 transmits the SDA signal supplied from the control section (CPU) or the sub-signal supplied from the converting section 184 to the source device through the SDA line 191.

The switch 186 is supplied, at the time of data transmission, with the sub-signal, from the converting section 184, forming the differential signal corresponding to the Rx data, and is supplied, at the time of data reception, with the SCL signal from the source device. Based on the control by the flipping control section 172, the switch 186 selects either the sub-signal forming the differential signal corresponding to the Rx data or the SCL signal, and outputs the same.

That is, at the time of the sink device receiving data transmitted from the source device, the switch 186 receives the SCL signal transmitted from the source device through the SCL line 192 and supplies the received SCL signal to the control section (CPU), or receives nothing.

Also, at the time of the sink device transmitting data to the source device, the switch 186 transmits the sub-signal supplied from the converting section 184 to the source device through the SCL line 192, or transmits nothing.

With respect to the respective switch 185 and switch 186, the flipping control section 172 flips the switch 185 and the switch 186, by controlling the switch 185 and the switch 186, so that either of the signals to be supplied is selected.

Meanwhile, when the source device and the sink device perform the IP communication with each other, whether half-duplex communication is possible or full-duplex communication is possible is determined based on the configuration of each of the source device and the sink device. Thus, by referring to the E-EDID received from the sink device, the source device determines whether to perform half-duplex communication or full-duplex communication, or bidirectional communication by the transmission/reception of a CEC signal.

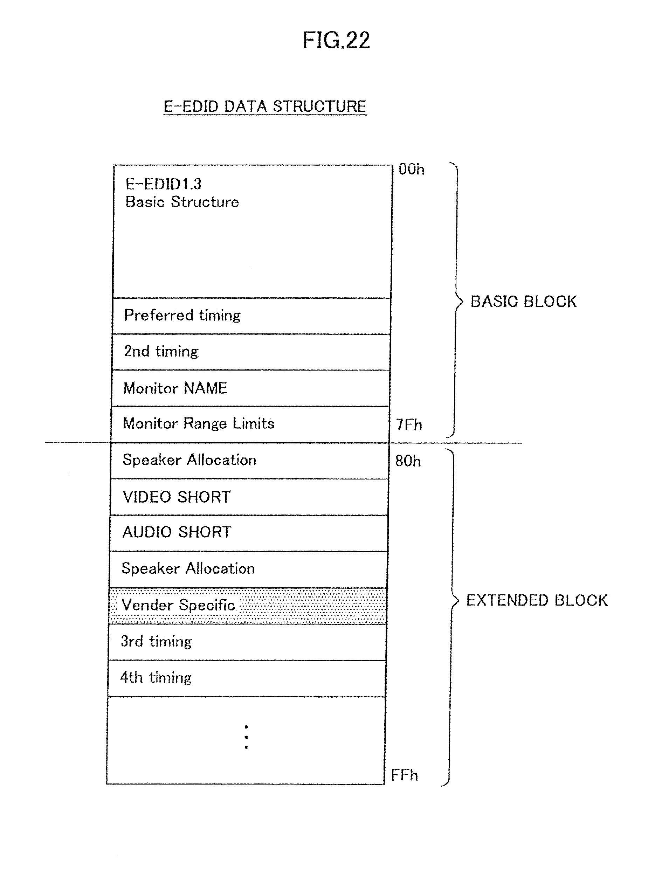

The E-EDID received by the source device is configured from a basic block and an extended block as shown in FIG. 22, for example.

Data, expressed as "E-EDID1.3 Basic Structure," specified by the standard of E-EDID1.3 is arranged at the beginning of the basic block of the E-EDID, and then, timing information, expressed as "Preferred timing," for maintaining the compatibility with the conventional EDID, and timing information, different from "Preferred timing" for maintaining the compatibility with the conventional EDID, expressed as "2nd timing," are arranged.

Also, in the basic block, subsequent to "2nd timing," information, expressed as "Monitor Name," indicating the name of a display device and information expressed as "Monitor Range Limits," indicating the number of displayable pixels where the aspect ratios are 4:3 and 16:9, are sequentially arranged.

On the other hand, information, expressed as "Speaker Allocation," relating to the left/right speakers is arranged at the beginning of the extended block, and subsequently, data, expressed as "VIDEO SHORT," in which information indicating displayable image size, frame rate and whether it is interlaced or progressive, and information, such as the aspect ratio, are described; data, expressed as "AUDIO SHORT," in which information, such as the compatible audio codec, sampling frequency, cutoff bandwidth, the number of codec bits, or the like, is described; and information, expressed as "Speaker Allocation," relating to the left/right speakers, are sequentially arranged.

Also, in the extended block, subsequent to "Speaker Allocation," data, expressed as "Vender Specific," uniquely defined for each manufacturer, timing information, expressed as "3rd timing," for maintaining the compatibility with the conventional EDID, and timing information, expressed as "4th timing," for maintaining the compatibility with the conventional EDID, are arranged.

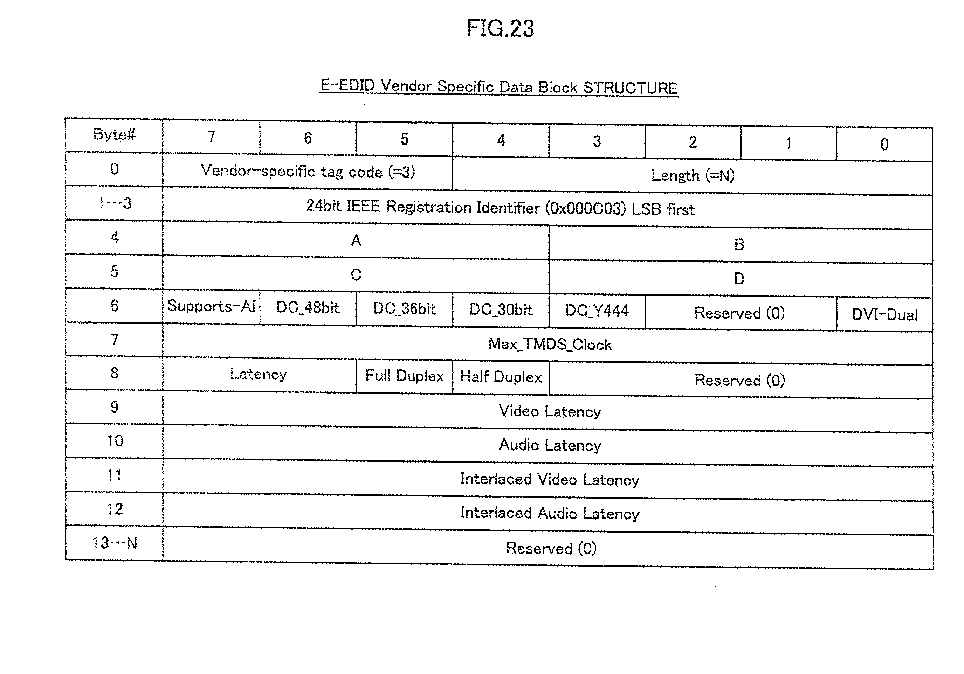

Furthermore, data expressed as "Vender Specific" has the data structure as shown in FIG. 23. That is, the data expressed as "Vender Specific" is provided with blocks 0 to N which are blocks of 1-byte.

In block 0 arranged at the beginning of the data expressed as "Vender Specific," a header, expressed as "Vendor-Specific tag code (=3)," indicating the data domain of data "Vender Specific," and information, expressed as "Length (=N)," indicating the length of data "Vender Specific" are arranged.

Also, in blocks 4 and 5, information expressed as "24bit IEEE Registration Identifier (0x000C03) LSB first" indicating number "0X000C03" registered for HDMI(R) is arranged in blocks 1 to 3. Furthermore, pieces of information, respectively expressed as "A," "B," "C," and "D," indicating a 24-bit physical address of the sink device are arranged.

In block 6, a flag, expressed as "Supports-AI," indicating the function with which the sink device is compatible, each of pieces of information, respectively expressed as "DC-48bit," "DC-36bit" and "DC-30bit," specifying the number of bits per pixel, a flag, expressed as "DC-Y444", indicating whether the sink device is capable of transmission of an image of YCbCr4:4:4, and a flag, expressed as "DVI-Dual," indicating whether the sink device is compatible with a dual Digital Visual Interface (DVI) are arranged.

Also, in block 7, information, expressed as "Max-TMDS-Clock," indicating the maximum frequency of a TMDS pixel clock is arranged. Furthermore, in block 8, a flag, expressed as "Latency," indicating the presence or absence of latency information of video and audio, a full-duplex flag, expressed as "Full Duplex," indicating whether full duplex communication is possible, and a half-duplex flag, expressed as "Half Duplex," indicating whether half duplex communication is possible are arranged.

Here, for example, the full-duplex flag that is set (set to "1," for example) indicates that the sink device has the function of performing full-duplex communication, that is, the sink device is configured as shown in FIG. 21; and the full-duplex flag that is reset (set to "0," for example) indicates that the sink device does not have the function of performing full duplex communication.

Similarly, the half-duplex flag that is set (set to "1," for example) indicates that the sink device has the function of performing half duplex communication, that is, the sink device is configured as shown in FIG. 20; and the half-duplex flag that is reset (set to "0," for example) indicates that the sink device does not have the function of performing half-duplex communication.

Also, in block 9 of data expressed as "Vender Specific," latency time data, expressed as "Video Latency," of a progressive video is arranged, and in block 10, latency time data, expressed as "Audio Latency," of audio of the progressive video is arranged. Furthermore, in block 11, latency time data, expressed as "Interlaced Video Latency," of an interlaced video is arranged, and in block 12, latency time data, expressed as "Interlaced Audio Latency," of audio of the interlaced video is arranged.

The source device determines, based on the full-duplex flag and the half-duplex flag included in the E-EDID received from the sink device, whether to perform half-duplex communication or full-duplex communication, or bidirectional communication by the transmission/reception of a CEC signal, and performs bidirectional communication with the sink device according to the determination result.

For example, when the source device is configured as shown in FIG. 20, the source device can perform half duplex communication with the sink device as shown in FIG. 20, but cannot perform half duplex communication with the sink device as shown in FIG. 21. Thus, when the power of the source device is turned on, the source device starts a communication process, and performs bidirectional communication according to the function of the sink device connected to the source device.

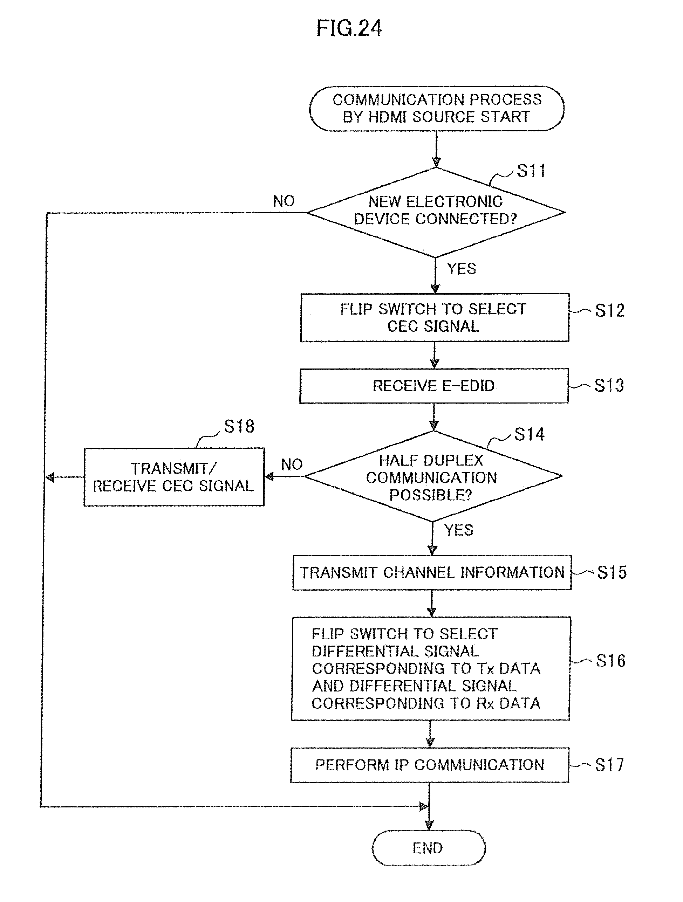

In the following, the communication process by the source device as shown in FIG. 20 will be described by referring to the flow chart of FIG. 24.

In step S11, the source device determines whether or not a new electronic device is connected to the source device. For example, the source device determines whether or not a new electronic device (sink device) is connected based on the level of voltage applied to a pin called Hot Plug Detect to which the HPD line 86 is connected.

When it is determined in step S11 that a new electronic device is not connected, a communication is not performed, and thus the communication process is terminated. On the other hand, when it is determined in step S11 that a new electronic device is connected, the flipping control section 121 flips the switch 133 in step S12, by controlling the switch 133, so that a CEC signal from the control section (CPU) of the source device is selected at the time of data transmission and a CEC signal from the sink device is selected at the time of data reception.

In step S13, the source device receives E-EDID transmitted from the sink device through the DDC 83. That is, when the connection of the source device is detected, the sink device reads out the E-EDID from the EDIDROM 85 and transmits the E-EDID read out to the source device through the DDC 83, and thus the source device receives the E-EDID transmitted from the sink device.

In step S14, the source device determines whether or not half duplex communication with the sink device is possible. That is, the source device determines whether or not the half-duplex flag "Half Duplex" is set by referring to the E-EDID received from the sink device. For example, when the half-duplex flag is set, the source device determines that bidirectional IP communication according to the half-duplex communication scheme, that is, half duplex communication, is possible.

When it is determined in step S14 that half duplex communication is possible, the source device transmits to the sink device through the switch 133 and the CEC line 84, in step S15, a signal, as channel information indicating a channel to be used for the bidirectional communication, indicating that IP communication according to the half-duplex communication scheme using the CEC line 84 and the reserved line 88 will be performed.

That is, when the half-duplex flag is set, the source device recognizes that the sink device is configured as shown in FIG. 20 and that half duplex communication using the CEC line 84 and the reserved line 88 is possible, and thus the source device transmits the channel information to the sink device to notify that half duplex communication will be performed.

In step S16, the flipping control section 121 flips the switch 133, by controlling the switch 133, so that a differential signal corresponding to Tx data from the converting section 131 is selected at the time of data transmission and a differential signal corresponding to Rx data from the sink device is selected at the time of data reception.

In step S17, each section of the source device performs the bidirectional IP communication with the sink device according to the half-duplex communication scheme, and the communication process is completed. That is, at the time of data transmission, the converting section 131 converts the Tx data supplied from the control section (CPU) to a differential signal, supplies one of the sub-signals forming the differential signal obtained by the conversion to the switch 133, and transmits the other sub-signal to the sink device through the reserved line 88. The switch 133 transmits the sub-signal supplied from the converting section 131 to the sink device through the CEC line 84. Thereby, the differential signal corresponding to the Tx data is transmitted from the source device to the sink device.

Also, at the time of data reception, the decoding section 132 receives a differential signal corresponding to Rx data transmitted from the sink device. That is, the switch 133 receives the sub-signal, transmitted from the sink device through the CEC line 84, of the differential signal corresponding to the Rx data, and supplies the received sub-signal to the decoding section 132. Based on the control by the timing control section 122, the decoding section 132 decodes the differential signal formed from the sub-signal supplied from the switch 133 and the sub-signal supplied from the sink device through the reserved line 88 to Rx data which is the original data, and outputs the Rx data to the control section (CPU).

Thus, the source device transmits/receives to/from the sink device various kinds of data, such as control data, pixel data, and audio data.

Also, when it is determined in step S14 that half duplex communication is not possible, the source device performs, in step S18, bidirectional communication with the sink device by transmitting/receiving a CEC signal, and the communication process is completed.

That is, the source device transmits/receives the control data to/from the sink device by transmitting, at the time of data transmission, the CEC signal to the sink device through the switch 133 and the CEC line 84, and receiving, at the time of data reception, the CEC signal transmitted from the sink device through the switch 133 and the CEC line 84.

In this manner, the source device refers to the half-duplex flag, and performs half duplex communication with the sink device capable of half duplex communication by using the CEC line 84 and the reserved line 88.

In this manner, by selecting data to be transmitted and data to be received by flipping the switch 133 and performing half duplex communication with the sink device by using the CEC line 84 and the reserved line, that is, IP communication according to the half-duplex communication scheme, high-speed bidirectional communication can be performed while maintaining the compatibility with the conventional HDMI.

As with the source device, when the power is turned on, the sink device also starts a communication process, and performs bidirectional communication with the source device.

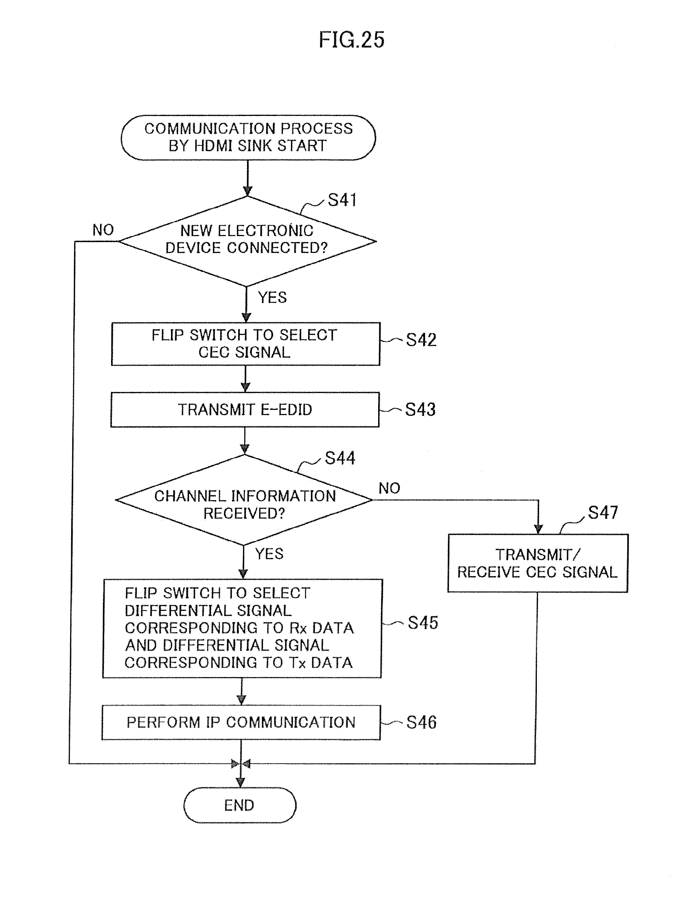

In the following, a communication process by the sink device as shown in FIG. 20 will be described by referring to the flow chart of FIG. 25.

In step S41, the sink device determines whether or not a new electronic device (source device) is connected to the sink device. For example, the sink device determines whether or not a new electronic device is connected based on the level of voltage applied to a pin called Hot Plug Detect to which the HPD line 86 is connected.

When it is determined in step S41 that a new electronic device is not connected, communication is not performed, and thus the communication process is terminated. On the other hand, when it is determined in step S41 that a new electronic device is connected, the flipping control section 124 flips the switch 135 in step S42, by controlling the switch 135, so that a CEC signal from the control section (CPU) of the sink device is selected at the time of data transmission and a CEC signal from the source device is selected at the time of data reception.

In step S43, the sink device reads out E-EDID from the EDIDROM 85, and transmits the E-EDID read out to the source device through the DDC 83.

In step S44, the sink device determines whether or not channel information transmitted from the source device is received.

That is, depending on the functions of the source device and the sink device, channel information indicating a channel for bidirectional communication is transmitted from the source device. For example, when the source device is configured as shown in FIG. 20, the source device and the sink device are capable of half duplex communication with each other using the CEC line 84 and the reserved line 88. Thus, channel information indicating that IP communication using the CEC line 84 and the reserved line 88 will be performed is transmitted from the source device to the sink device. The sink device receives the channel information transmitted from the source device through the switch 135 and the CEC line 84, and determines that the channel information is received.

On the other hand, when the source device does not have the function of performing half duplex communication, since the channel information is not transmitted from the source device to the sink device, the sink device determines that the channel information is not received.

When it is determined in step S44 that the channel information is received, the process proceeds to step S45, and the flipping control section 124 flips the switch 135, by controlling the switch 135, so that a differential signal corresponding to Rx data from the converting section 134 is selected at the time of data transmission and a differential signal corresponding to Tx data from the source device is selected at the time of data reception.

In step S46, the sink device performs bidirectional IP communication with the source device according to the half-duplex communication scheme, and the communication process is completed. That is, at the time of data transmission, based on the control by the timing control section 123, the converting section 134 converts the Rx data supplied from the control section (CPU) of the sink device to a differential signal, supplies one of the sub-signals forming the differential signal obtained by the conversion to the switch 135, and transmits the other sub-signal to the source device through the reserved line 88. Thus, the differential signal corresponding to the Rx data is transmitted from the sink device to the source device.

Also, at the time of data reception, the decoding section 136 receives the differential signal, corresponding to the Tx data, transmitted from the source device. That is, the switch 135 receives a sub-signal, transmitted from the source device through the CEC line 84, of the differential signal corresponding to the Tx data, and supplies the received sub-signal to the decoding section 136. The decoding section 136 decodes the differential signal formed from the sub-signal supplied from the switch 135 and the sub-signal supplied from the source device through the reserved line 88 to Tx data which is the original data, and outputs the Tx data to the control section (CPU).

Thus, the sink device transmits/receives to/from the source device various kinds of data, such as control data, pixel data, and audio data.

Also, when it is determined in step S44 that the channel information is not received, the sink device performs, in step S47, bidirectional communication with the source device by transmitting/receiving a CEC signal, and the communication process is completed.

That is, the sink device transmits/receives the control data to/from the source device by transmitting, at the time of data transmission, the CEC signal to the source device through the switch 135 and the CEC line 84, and receiving, at the time of data reception, the CEC signal transmitted from the source device through the switch 35 and the CEC line 84.

In this manner, the sink device performs half duplex communication with the sink device by using the CEC line 84 and the reserved line 88 upon receiving the channel information.

In this manner, with the sink device selecting data to be transmitted and data to be received by flipping the switch 135, and performing half duplex communication with the source device by using the CEC line 84 and the reserved line 88, high-speed bidirectional communication can be performed while maintaining the compatibility with the conventional HDMI.

Also, when the source device is configured as shown in FIG. 21, in the communication process, the source device determines, based on the full-duplex flag included in the E-EDID, whether the sink device has the function of performing full duplex communication, and performs bidirectional communication according to the determination result.

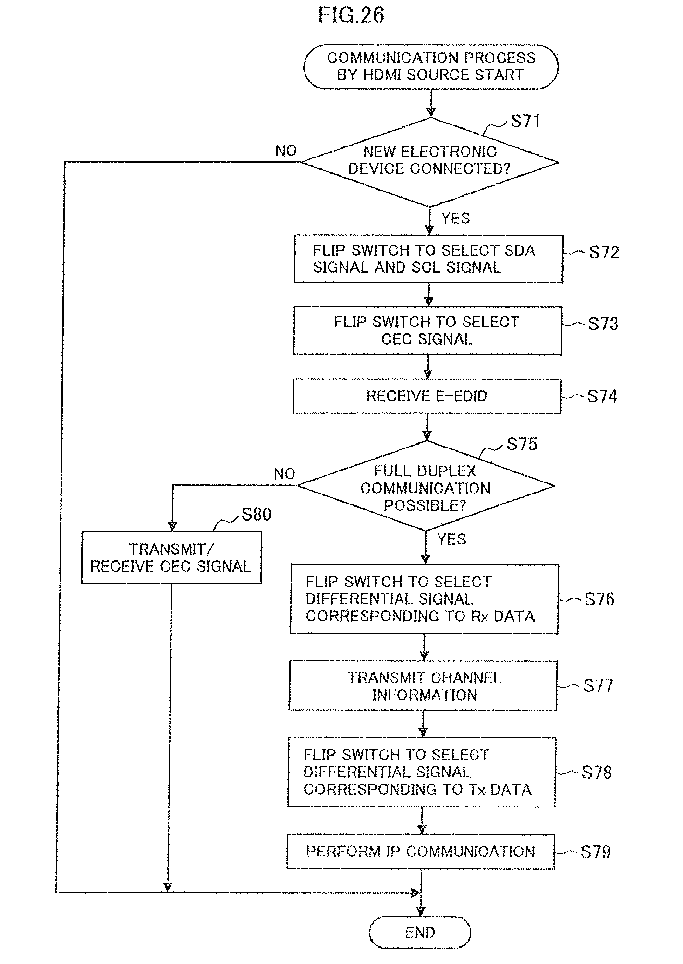

In the following, the communication process by the source device as shown in FIG. 21 will be described by referring to the flow chart of FIG. 26.

In step S71, the source device determines whether or not a new electronic device is connected to the source device. When it is determined in step S71 that a new electronic device is not connected, a communication is not performed, and thus the communication process is terminated.

On the other hand, when it is determined in step S71 that a new electronic device is connected, the flipping control section 171 flips the switch 181 and the switch 182 in step S72, by controlling the switch 181 and the switch 182, so that a SDA signal from the control section (CPU) of the source device is selected by the switch 181 and a SCL signal from the control section (CPU) of the source device is selected by the switch 182 at the time of data transmission, and further, a SDA signal from the sink device is selected by the switch 181 at the time of data reception.

In step S73, the flipping control section 121 flips the switch 133, by controlling the switch 133, so that a CEC signal from the control section (CPU) of the source device is selected at the time of data transmission and a CEC signal from the sink device is selected at the time of data reception.

In step S74, the source device receives E-EDID transmitted from the sink device through the SDA line 191 of the DDC 83. That is, when the connection of the source device is detected, the sink device reads out the E-EDID from the EDIDROM 85 and transmits the E-EDID read out to the source device through the SDA line 191 of the DDC 83, and thus the source device receives the E-EDID transmitted from the sink device.

In step S75, the source device determines whether or not full duplex communication with the sink device is possible. That is, the source device determines whether or not the full-duplex flag "Full Duplex" of FIG. 23 is set by referring to the E-EDID received from the sink device, and, for example, when the full-duplex flag is set, the source device determines that bidirectional IP communication according to the full-duplex communication scheme, that is, full duplex communication, is possible.

When it is determined in step S75 that full duplex communication is possible, the flipping control section 171 flips the switch 181 and the switch 182 in step S76, by controlling the switch 181 and the switch 182, so that a differential signal corresponding to Rx data from the sink device is selected at the time of data reception.

That is, the flipping control section 171 flips the switch 181 and the switch 182 so that, at the time of data reception, among the sub-signals forming the differential signal transmitted from the sink device and corresponding to the Rx data, the sub-signal transmitted through the SDA line 191 is selected by the switch 181 and the sub-signal transmitted through the SCL line 192 is selected by the switch 182.

The SDA line 191 and the SCL line 192 forming the DDC 83 are not utilized after the E-EDID is transmitted from the sink device from the source device. That is, transmission/reception of the SDA signal and the SCL signal through the SDA line 191 and the SCL line 192 is not performed, and thus the SDA line 191 and the SCL line 192 can be utilized as transmission lines for Rx data according to the full duplex communication by flipping the switch 181 and the switch 182.

In step S77, the source device transmits to the sink device through the switch 133 and the CEC line 84 a signal, as channel information indicating a channel for bidirectional communication, indicating that IP communication according to the full-duplex communication scheme using the CEC line 84 and the reserved line 88 as well as the SDA line 191 and the SCL line 192 will be performed.

That is, when the full-duplex flag is set, the source device recognizes that the sink device is configured as shown in FIG. 24 and that full duplex communication using the CEC line 84 and the reserved line 88 as well as the SDA line 191 and the SCL line 192 is possible, and thus the source device transmits the channel information to the sink device to notify that full duplex communication will be performed.

In step S78, the flipping control section 121 flips the switch 133, by controlling the switch 133, so that a differential signal corresponding to Tx data from the converting section 131 is selected at the time of data transmission. That is, the flipping control section 121 flips the switch 133 so that a sub-signal, supplied from the converting section 131 to the switch 133, of a differential signal corresponding to the Tx data is selected.

In step S79, the source device performs bidirectional IP communication with the sink device according to the full-duplex communication scheme, and the communication process is completed. That is, at the time of data transmission, the converting section 131 converts the Tx data supplied from the control section (CPU) of the source device to a differential signal. Then, one of the sub-signals forming the differential signal obtained by the conversion is supplied to the switch 133, and the other sub-signal is transmitted to the sink device through the reserved line 88. The switch 133 transmits the sub-signal supplied from the converting section 131 to the sink device through the CEC line 84. Thereby, the differential signal corresponding to the Tx data is transmitted from the source device to the sink device.

Also, at the time of data reception, the decoding section 183 receives a differential signal corresponding to Rx data transmitted from the sink device. That is, the switch 181 receives the sub-signal, transmitted form the sink device through the SDA line 191, of the differential signal corresponding to the Rx data, and supplies the received sub-signal to the decoding section 183. Also, the switch 182 receives the other sub-signal, transmitted from the sink device through the SCL line 192, of the differential signal corresponding to the Rx data, and supplies the received sub-signal to the decoding section 183. The decoding section 183 decodes the differential signal formed from the sub-signals supplied from the switch 181 and the switch 182 to Rx data which is the original data, and outputs the Rx data to the control section (CPU).

Thus, the source device transmits/receives to/from the sink device various kinds of data, such as control data, pixel data, and audio data.

Also, when it is determined in step S75 that full duplex communication is not possible, the source device performs, in step S80, bidirectional communication with the sink device by transmitting/receiving a CEC signal, and the communication process is completed.

That is, the source device transmits/receives the control data to/from the sink device by transmitting, at the time of data transmission, the CEC signal to the sink device through the switch 133 and the CEC line 84, and receiving, at the time of data reception, the CEC signal transmitted from the sink device through the switch 133 and the CEC line 84.

In this manner, the source device refers to the full-duplex flag, and performs full duplex communication with the sink device capable of the full duplex communication by using the CEC line 84 and the reserved line 88 as well as the SDA line 191 and the SCL line 192.

In this manner, by selecting data to be transmitted and data to be received by flipping the switch 133, the switch 181 and the switch 182, and performing full duplex communication with the sink device by using the CEC line 84 and the reserved line 88 as well as the SDA line 191 and the SCL line 192, high-speed bidirectional communication can be performed while maintaining the compatibility with the conventional HDMI.

Also in a case where the sink device is configured as shown in FIG. 21, the sink device performs the communication process as in the case for the sink device shown in FIG. 20, and performs bidirectional communication with the source device.

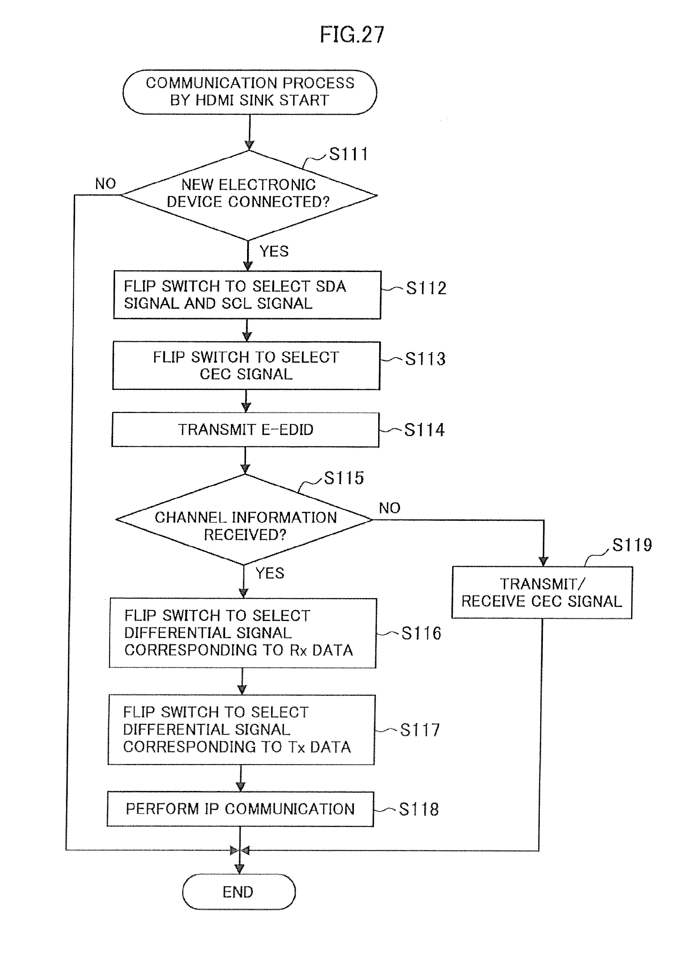

In the following, a communication process by the sink device as shown in FIG. 21 will be described by referring to the flow chart of FIG. 27.

In step S111, the sink device determines whether or not a new electronic device (source device) is connected to the sink device. When it is determined in step S111 that a new electronic device is not connected, communication is not performed, and thus the communication process is terminated.

On the other hand, when it is determined in step S111 that a new electronic device is connected, the flipping control section 172 controls the switch 185 and the switch 186 in step S112, and a SDA signal from the control section (CPU) of the sink device is selected by the switch 185 at the time of data transmission. Furthermore, the flipping control section 172 flips the switch 185 and the switch 186 so that a SDA signal from the source device is selected by the switch 185 and a SCL signal from the source device is selected by the switch 186 at the time of data reception.

In step S113, the flipping control section 124 flips the switch 135, by controlling the switch 135, so that a CEC signal from the control section (CPU) of the sink device is selected at the time of data transmission and a CEC signal from the source device is selected at the time of data reception.

In step S114, the sink device reads out E-EDID from the EDIDROM 85, and transmits the E-EDID read out to the source device through the switch 185 and the SDA line 191 of the DDC 83.

In step S115, the sink device determines whether or not channel information transmitted from the source device is received.

That is, depending on the functions of the source device and the sink device, channel information indicating a channel for bidirectional communication is transmitted from the source device. For example, when the source device is configured as shown in FIG. 21, since the source device and the sink device are capable of full duplex communication with each other, channel information indicating that IP communication according to the full-duplex communication scheme using the CEC line 84 and the reserved line 88 as well as the SDA line 191 and the SCL line 192 will be performed is transmitted from the source device to the sink device. At this time, the sink device receives the channel information transmitted from the source device through the switch 135 and the CEC line 84, and determines that the channel information is received.

On the other hand, when the source device does not have the function of performing full duplex communication, since channel information is not transmitted from the source device to the sink device, the sink device determines that the channel information is not received.

When it is determined in step S115 that the channel information is received, the process proceeds to step S116. The flipping control section 172 flips the switch 185 and the switch 186, by controlling the switch 185 and the switch 186, so that a differential signal corresponding to Rx data from the converting section 184 is selected at the time of data transmission.

In step 117, the flipping control section 124 flips the switch 135, by controlling the switch 135, so that a differential signal corresponding to Tx data from the source device is selected at the time of data reception.

In step S118, the sink device performs bidirectional IP communication with the source device according to the full-duplex communication scheme, and the communication process is completed. That is, at the time of data transmission, the converting section 184 converts the Rx data supplied from the control section (CPU) of the sink device to a differential signal, and supplies one of the sub-signals forming the differential signal obtained by the conversion to the switch 185 and supplies the other sub-signal to the switch 186. The switch 185 and the switch 186 transmit the sub-signals supplied from the converting section 184 to the source device through the SDA line 191 and the SCL line 192. Thereby, the differential signal corresponding to the Rx data is transmitted from the sink device to the source device.

Also, at the time of data reception, the decoding section 136 receives a differential signal corresponding to Tx data transmitted from the source device. That is, the switch 135 receives the sub-signal, transmitted from the source device through the CEC line 84, of the differential signal corresponding to the Tx data, and supplies the received sub-signal to the decoding section 136. The decoding section 136 decodes the differential signal formed from the sub-signal supplied from the switch 135 and the sub-signal supplied from the source device through the reserved line 88 to Tx data which is the original data, and outputs the Tx data to the control section (CPU).

Thus, the sink device transmits/receives to/from the source device various kinds of data, such as control data, pixel data, and audio data.

Also, when it is determined in step S115 that the channel information is not received, the sink performs, in step S119, bidirectional communication with the source device by transmitting/receiving a CEC signal, and the communication process is completed.

In this manner, the sink device performs full duplex communication with the sink device by using the CEC line 84 and the reserved line 88 as well as the SDA line 191 and the SCL line 192 upon receiving the channel information.

In this manner, with the sink device selecting data to be transmitted and data to be received by flipping the switch 135, the switch 185 and the switch 186, and performing full duplex communication with the source device by using the CEC line 84 and the reserved line 88 as well as the SDA line 191 and the SCL line 192, high-speed bidirectional communication can be performed while maintaining the compatibility with the conventional HDMI.

Incidentally, in the example of FIG. 21, the source device is configured in such a way that the converting section 131 is connected to the CEC line 84 and the reserved line 88, and the decoding section 183 is connected to the SDA line 191 and the SCL line 192. However, the source device may be configured in such a way that the decoding section 183 is connected to the CEC line 84 and the reserved line 88, and the converting section 131 is connected to the SDA line 191 and the SCL line 192.

In such a case, the switch 181 and the switch 182 are connected to the decoding section 183 while also being connected to the CEC line 84 and the reserved line 88, and the switch 133 is connected to the converting section 131 while also being connected to the SDA line 191.

Also, in a similar manner, the sink device of FIG. 21 may be configured in such a way that the converting section 184 is connected to the CEC line 84 and the reserved line 88, and the decoding section 136 is connected to the SDA line 191 and the SCL line 192. In such a case, the switch 185 and the switch 186 are connected to the converting section 184 while also being connected to the CEC line 84 and the reserved line 88, and the switch 135 is connected to the decoding section 136 while also being connected to the SDA line 191.

Furthermore, in FIG. 20, the CEC line 84 and the reserved line 88 may be the SDA line 191 and the SCL line 192. That is, the converting section 131 and the decoding section 132 of the source device and the converting section 134 and the decoding section 136 of the sink device may be connected to the SDA line 191 and the SCL line 192, and the source device and the sink device may perform IP communication according to the half-duplex communication scheme. Furthermore, in this case, a connection of an electronic device may be detected by using the reserved line 88.

Furthermore, the source device and the sink device may respectively have both functions of performing half duplex communication and performing full duplex communication. In such a case, the source device and the sink device can perform IP communication according to the half-duplex communication scheme or the full-duplex communication scheme depending on the function of the connected electronic device.

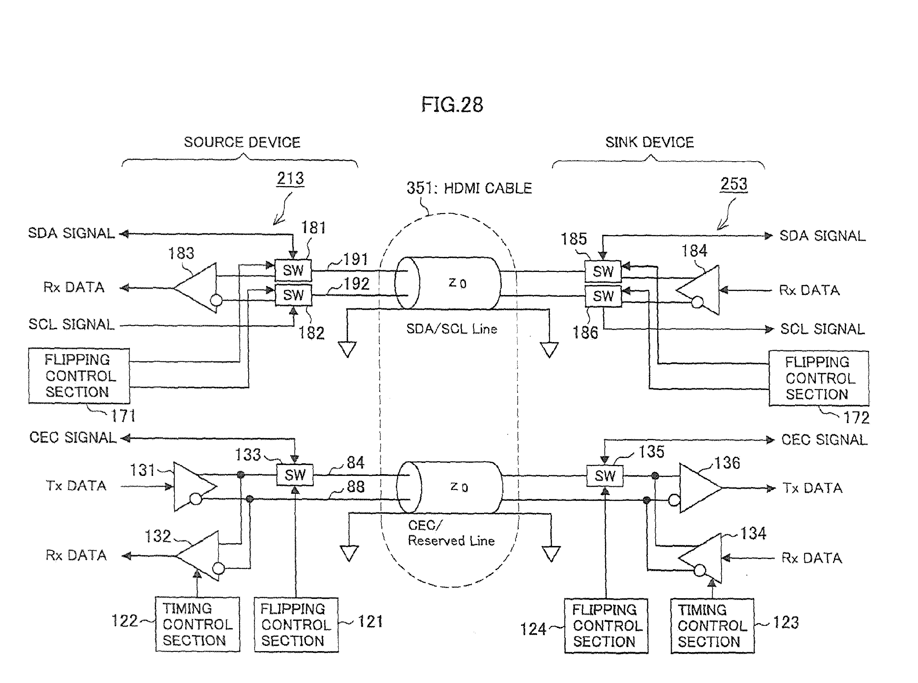

When the source device and the sink device respectively have both functions of performing half duplex communication and performing full duplex communication, the source device and the sink device are configured as shown in FIG. 28, for example. Incidentally, in FIG. 28, sections corresponding to those in FIG. 20 or FIG. 21 are denoted with the same reference numerals, and the explanations thereof will be omitted as appropriate.

The high-speed data line interface 213 of the source device shown in FIG. 28 includes the converting section 131, the decoding section 132, the switch 133, the switch 181, the switch 182, the decoding section 183, the flipping control section 121, the timing control section 122, and the flipping control section 171. That is, the high-speed data line interface 213 of the source device of FIG. 28 is configured in such a way that the timing control section 122 and the decoding section 132 of FIG. 20 are further provided in the high-speed data line interface 213 of the source device as shown in FIG. 21.

Also, the high-speed data line interface 213 of the sink device shown in FIG. 28 includes the converting section 134, the switch 135, the decoding section 136, the converting section 184, the switch 185, the switch 186, the timing control section 123, the flipping control section 124, and the flipping control section 172. That is, the sink device of FIG. 28 is configured in such a way that the timing control section 123 and the converting section 134 of FIG. 20 are further provided in the sink device as shown in FIG. 21.

Next, a communication process by the source device and the sink device of FIG. 28 will be described.

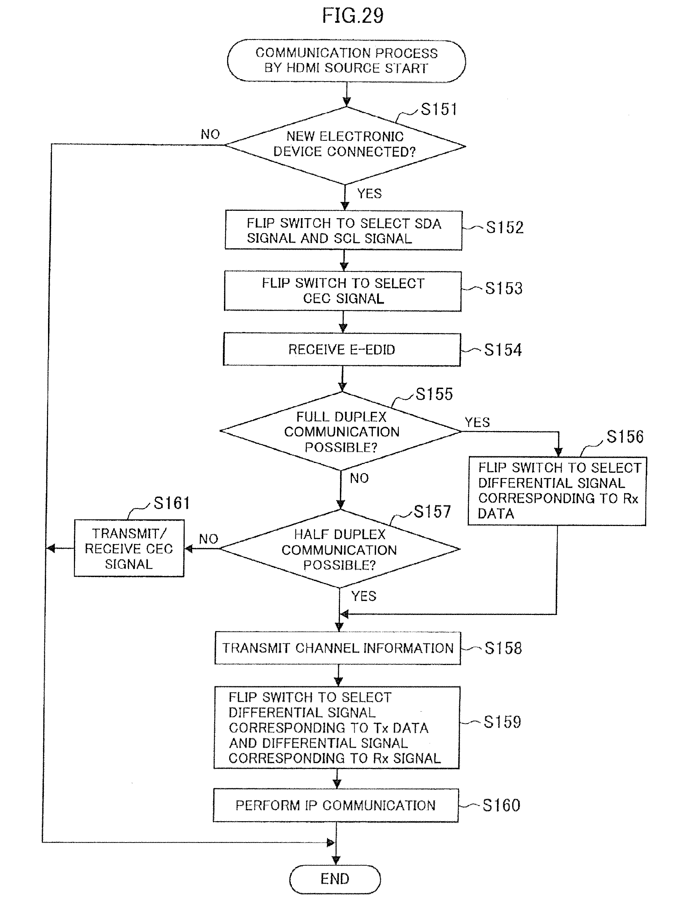

First, referring to the flow chart of FIG. 29, a communication process by the source device of FIG. 28 will be described. Incidentally, each of the processes of steps S151 to S154 is the same as each of the processes of the steps S71 to 74 of FIG. 26, and thus the explanations thereof will be omitted.

In step S155, the source device determines whether or not full duplex communication with the sink device is possible. That is, the source device determines whether or not the full-duplex flag "Full Duplex" of FIG. 23 is set by referring to E-EDID received from the sink device.

When it is determined in step S155 that full duplex communication is possible, that is, when the sink device as shown in FIG. 28 or FIG. 21 is connected to the source device, the flipping control section 171 flips the switch 181 and the switch 182 in step S156, by controlling the switch 181 and the switch 182, so that a differential signal corresponding to Rx data from the sink device is selected at the time of data reception.

On the other hand, when it is determined in step S155 that full duplex communication is not possible, the source device determines in step S157 whether or not half duplex communication is possible. That is, the source device determines whether or not the half-duplex flag "Half Duplex" is set by referring to the received E-EDID. In other words, the source device determines whether or not the sink device as shown in FIG. 20 is connected to the source device.

When it is determined in step S157 that half duplex communication is possible, or when the switch 181 and the switch 182 are flipped in step S156, the source device transmits channel information to the sink device through the switch 133 and the CEC line 84 in step S158.

Here, when it is determined in step S155 that full duplex communication is possible, since the sink device has the function of performing full duplex communication, the source device transmits to the sink device through the switch 133 and the CEC line 84 a signal, as channel information, indicating that IP communication using the CEC line 84 and the reserved line 88 as well as the SDA line 191 and the SCL line 192 will be performed.

Also, when it is determined in step S157 that half duplex communication is possible, although the sink device does not have the function of performing full duplex communication, the sink device does have the function of performing half duplex communication, and thus the source device transmits to the sink device through the switch 133 and the CEC line 84 a signal, as channel information, indicating that an IP communication using the CEC line 84 and the reserved line 88 will be performed.

The flipping control section 121 flips the switch 133 in step S159, by controlling the switch 133, so that a differential signal corresponding to Tx data from the converting section 131 is selected at the time of data transmission and a differential signal corresponding to Rx data transmitted from the sink device is selected at the time of data reception. Incidentally, when the source device and the sink device perform full duplex communication with each other, the differential signal corresponding to the Rx data is not transmitted from the sink device through the CEC line 84 and the reserved line 88 at the time of the source device receiving data. Accordingly, the differential signal corresponding to the Rx data is not supplied to the decoding section 132.

In step S160, the source device performs bidirectional IP communication with the sink device, and the communication process is completed. That is, when the source device performs full duplex communication with the sink device, and when the source device performs half duplex communication with the sink device, the converting section 131 converts, at the time of data transmission, the Tx data supplied from the control section (CPU) of the source device to a differential signal, and transmits one of the sub-signals forming the differential signal obtained by the conversion to the sink device through the switch 133 and the CEC line 84 and transmits the other sub-signal to the sink device through the reserved line 88.

Also, when the source device performs full duplex communication with the sink device, at the time of data reception, the decoding section 183 receives the differential signal corresponding to the Rx data transmitted from the sink device, decodes the received differential signal to Rx data which is the original data, and outputs the Rx data to the control section (CPU).

On the other hand, when the source device performs half duplex communication with the sink device, at the time of data reception, the decoding section 132 receives, based on the control by the timing control section 122, the differential signal corresponding to the Rx data transmitted from the sink device, decodes the received differential signal to Rx data which is the original data, and outputs the Rx data to the control section (CPU).

Thus, the source device transmits/receives to/from the sink device various kinds of data, such as control data, pixel data, and audio data.

Also, when it is determined in step S157 that half duplex communication is not possible, the source device performs, in step S161, bidirectional communication with the sink device by transmitting/receiving a CEC signal through the CEC line 84, and the communication process is completed.

In this manner, by referring to the full-duplex flag and the half duplex flag, the source device performs full duplex communication or half duplex communication depending on the function of the sink device which is the communication counterpart.

In this manner, by selecting data to be transmitted and data to be received by flipping the switch 133, the switch 181 and the switch 182, and performing full duplex communication or half duplex communication depending on the function of the sink device which is the communication counterpart, high-speed bidirectional communication can be performed with a more optimal communication method selected while maintaining the compatibility with the conventional HDMI.

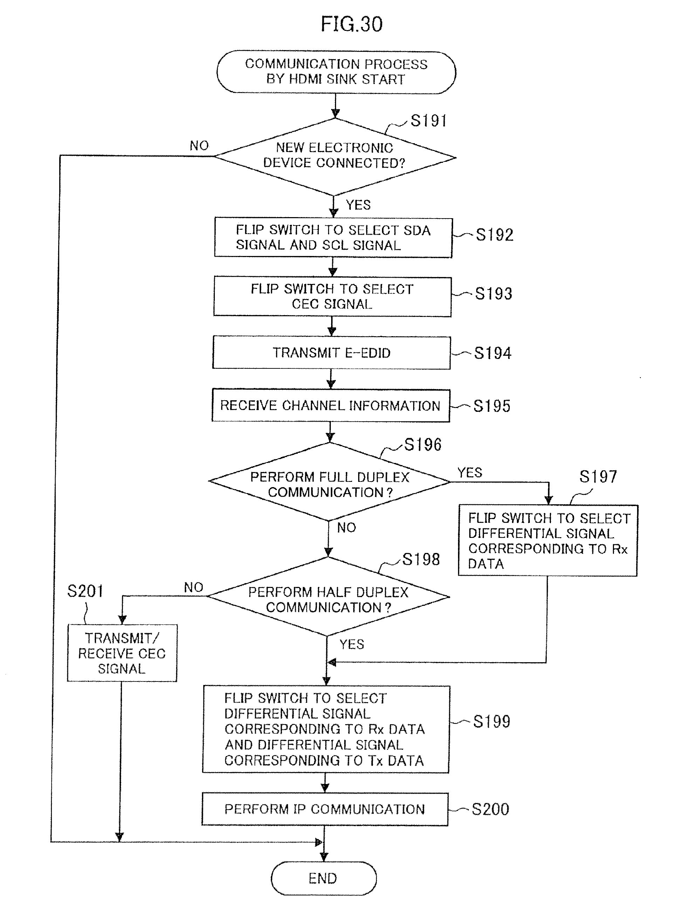

Next, referring to the flow chart of FIG. 30, a communication process by the sink device of FIG. 28 will be described. Incidentally, each of the processes of steps S191 to S194 is the same as each of the processes of the steps S111 to S114, and thus the explanations thereof will be omitted.

In step S195, the sink device receives channel information transmitted from the source device through the switch 135 and the CEC line 84. Incidentally, when the source device connected to the sink device has neither the function of performing full duplex communication nor the function of performing half duplex communication, since channel information is not transmitted from the source device to the sink device, the sink device does not receive the channel information.

In step S196, based on the received channel information, the sink device determines whether or not to perform full duplex communication. For example, the sink device determines to perform full duplex communication when channel information indicating that IP communication using the CEC line 84 and the reserved line 88 as well as the SDA line 191 and the SCL line 192 will be performed is received.

When it is determined in step S196 that full duplex communication is to be performed, the flipping control section 172 flips the switch 185 and the switch 186 in step S197, by controlling the switch 185 and the switch 186, so that a differential signal corresponding to Rx data from the converting section 184 is selected at the time of data transmission.

Also, when it is determined in step S196 that full duplex communication is not to be performed, based on the received channel information, the sink device determines in step S198 whether or not to perform half duplex communication. For example, the sink device determines to perform half duplex communication when channel information indicating that IP communication using the CEC line 84 and the reserved line 88 will be performed is received.

When it is determined in step S198 that half duplex communication is to be performed, or when the switch 185 and the switch 186 are flipped in step S197, the flipping control section 124 flips the switch 135 in step S199, by controlling the switch 135, so that a differential signal corresponding to Rx data from the converting section 134 is selected at the time of data transmission and a differential signal corresponding to Tx data from the source device is selected at the time of data reception.

Incidentally, when the source device and the sink device perform full duplex communication with each other, since a differential signal corresponding to Rx data is not transmitted from the converting section 134 to the transmitter 81 at the time of the data transmission in the sink device, the differential signal corresponding to the Rx data is not supplied to the switch 135.

In step S200, the sink device performs bidirectional IP communication with the source device, and the communication process is completed.

That is, when the sink device performs full duplex communication with the source device, at the time of data transmission, the converting section 184 converts Rx data supplied from the control section (CPU) of the sink device to a differential signal, and transmits one of the sub-signals forming the differential signal obtained by the conversion to the source device through the switch 185 and the SDA line 191 and transmits the other sub-signal to the source device through the switch 186 and the SCL line 192.

Also, when the sink device performs half duplex communication, at the time of data transmission, the converting section 134 converts Rx data supplied from the control section (CPU) of the sink data to a differential signal. Then, the converting section 134 transmits one of the sub-signals forming the differential signal obtained by the conversion to the transmitter 81 through the switch 135 and the CEC line 84 and transmits the other sub-signal to the source device through the reserved line 88.

Furthermore, when the sink device performs full duplex communication with the source device, and when the sink device performs half duplex communication with the source device, at the time of data reception, the decoding section 136 receives a differential signal corresponding to Tx data transmitted from the source device, decodes the received differential signal to Tx data which is original data, and outputs the Tx data to the control section (CPU).

Furthermore, when it is determined in step S198 that half duplex communication is not to be performed, that is, for example, when channel information is not transmitted, the sink device performs, in step S201, bidirectional communication with the source device by transmitting/receiving a CEC signal, and the communication process is completed.

In this manner, the sink device performs full duplex communication or half duplex communication depending on the received channel information, that is, depending on the function of the source device which is the communication counterpart.

In this manner, by selecting data to be transmitted and data to be received by flipping the switch 135, the switch 185 and the switch 186, and performing full duplex communication or the half duplex communication depending on the function of the source device which is the communication counterpart, high-speed bidirectional communication can be performed with a more favorable communication method selected while maintaining the compatibility with the conventional HDMI (R).

Also, by connecting the source device and the sink device by the HDMI cable 351 in which the CEC line 84 and the reserved line 88 that are mutually wired into a differentially twisted pair, shielded, and grounded to a ground line, and the SDA line 191 and the SCL line 192 mutually wired into a differentially twisted pair, shielded and grounded to the ground line are included, high-speed bidirectional IP communication according to the half-duplex communication scheme or the full-duplex communication scheme can be performed while maintaining the compatibility with the conventional HDMI cable.

Next, the series of processes described above can be performed by specialized hardware or can be performed by software. When the series of processes is to be performed by software, a program configuring such software is installed in a microcomputer or the like for controlling the source device and the sink device, for example.

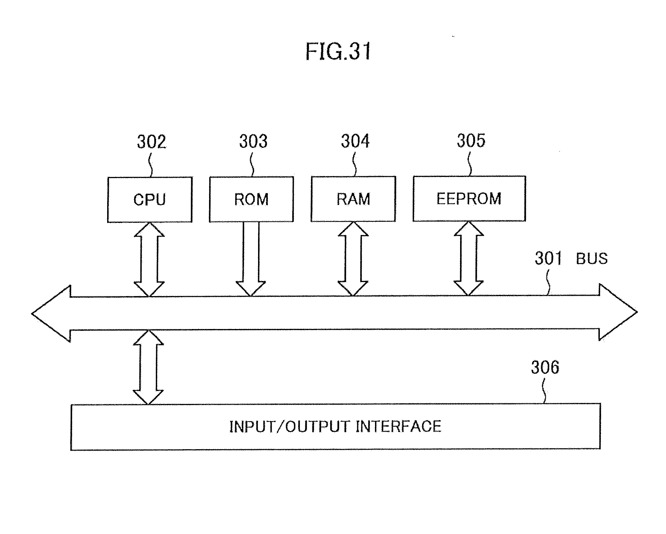

Thus, FIG. 31 shows a configuration example of an embodiment of a computer in which a program for executing the series of processes described above is installed.

The program can be stored in advance in an Electrically Erasable Programmable Read-only Memory (EEPROM) 305 or the ROM 303 as a recording medium embedded in the computer.

Or, the program can also be stored (recorded) temporarily or permanently in a removable recording medium, such as a flexible disk, a Compact Disc Read Only Memory (CD-ROM), a Magneto Optical (MO) disk, a Digital Versatile Disc (DVD), a magnetic disk, or a semiconductor memory. Such a removable recording medium can be provided as so-called package software.

Incidentally, the program can not only be installed in the computer from the removable recording medium as described above, but can also be transferred wirelessly from a download site to the computer via a satellite for digital satellite broadcasting, or can be transferred by wire to the computer via a network, such as a LAN or the Internet. The computer can receive the program transferred in such a manner by an input/output interface 306, and install the same in the embedded EEPROM 305.

The computer has a Central Processing Unit (CPU) 302 embedded therein. The input/output interface 306 is connected to the CPU 302 via a bus 301, and the CPU 302 loads the program stored in the Read Only Memory (ROM) 303 or the EEPROM 305 in a Random Access Memory (RAM) 304, and executes the program. Thereby, the CPU 302 performs the processes in accordance with the flow charts described above, or the processes to be performed by the configuration of the block diagrams described above.

Here, in the present specification, the processing steps describing the program for causing the computer to perform various processes need not necessarily be performed chronologically in the order shown in the flow charts, but may include processes executed in parallel or individually (for example, parallel processing or object processing). Also, the program may be executed by a single computer, or may be executed in a distributed manner by a plurality of computers.

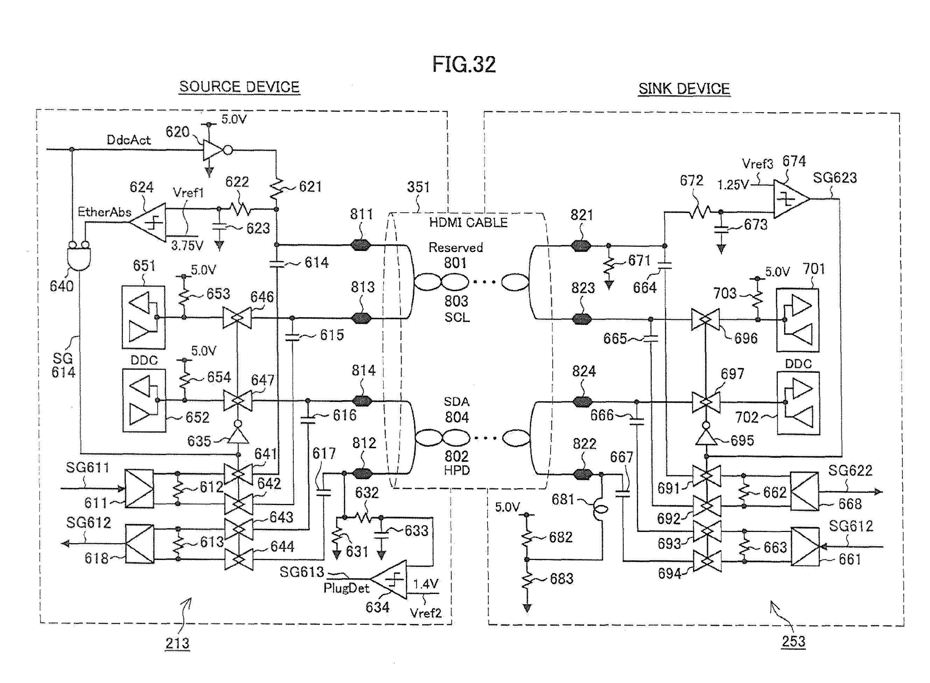

According to the configuration example as shown in FIG. 8 described above, a circuit for LAN communication can be configured regardless of the electrical specifications specified for DDC. FIG. 32 shows another configuration example having a similar effect.

This example has a configuration where, with an interface performing, by one cable, video and audio data transmission; communication of exchange and authentication of connected device information, and device control data; and LAN communication; the LAN communication is performed as single direction communication through two pairs of differential transmission lines and connection status of the interface is notified by a DC bias potential of at least one of the transmission lines, and further has its **characteristic in that** at least two transmission lines are used for the communication, time-divided from the LAN communication, of exchange and authentication of the connected device information.

The source device includes a LAN signal transmitter circuit 611, terminal resistors 612 and 613, AC coupling capacitors 614 to 617, a LAN signal receiver circuit 618, an inverter 620, a resistor 621, a resistor 622 and a capacitor 623 forming a low-pas filter, a comparator 624, a pull-down resistor 631, a resistor 632 and a capacitor 633 forming a low-pass filter, a comparator 634, a NOR gate 640, analog switches 641 to 644, an inverter 645, analog switches 646 and 747, DDC transceivers 651 and 652, and pull-up resistors 653 and 654.

Also, a sink device 602 includes a LAN signal transmitter circuit 661, terminal resistors 662 and 663, AC coupling capacitors 664 to 667, a LAN signal receiver circuit 668, a pull-down resistor 671, a resistor 672 and a capacitor 673 forming a low-pass filter, a comparator 674, a choke coil 681, resistors 682 and 683 series-connected between power potential and reference potential, analog switches 691 to 694, an inverter 695, analog switches 696 and 697, DDC transceivers 701 and 702, and pull-up resistors 703 and 704.

A differential transmission line formed from a reserved line 801 and a SCL line 803 and a differential transmission line formed from a SDA line 804 and a HPD line 802 are within the HDMI cable 351, and source side terminals 811 and to 814 and sink side terminals 821 to 824 of the differential transmission lines are formed.

The reserved line 801 and the SCL line 803 as well as the SDA line 804 and the HPD line 802 are mutually wired as differential twisted pairs.

Within the source device, the terminals 811 and 813 are connected, through the AC coupling capacitors 614 and 605 as well as the analog switches 641 and 642, to the terminal resistor 612 and the transmitter circuit 611 for transmitting a LAN transmission signal SG611 to the sink. The terminals 814 and 812 are connected, through the AC coupling capacitors 616 and 617 as well as the analog switches 643 and 644, to the terminal resistor 613 and the receiver circuit 618 for receiving a LAN signal from the sink device.

Within the sink device, the terminals 821 to 824 are connected, through the AC coupling capacitors 664, 665, 666 and 667 and the analog switches 691 to 694, to the transmitter circuit 661 and the receiver circuit 668 and the terminal resistors 662 and 663. The analog switches 641 to 644 and 691 to 694 become conductive when performing LAN communication and are opened when performing DDC communication.

The source device connects the terminal 813 and the terminal 814, through the other analog switches 646 and 647, to the DDC transceivers 651 and 652 and the pull-up resistors 653 and 654.

The sink device connects the terminal 823 and the terminal 824, through the analog switches 696 and 697, to the DDC transceivers 701 and 702 and the pull-up resistor 703. The analog switches 646 and 647 become conductive when performing DDC communication and are opened when performing LAN communication.

A mechanism for identifying an E-HDMI compatible device based on the potential of the reserved line 801 is basically the same as the example as shown in FIG. 8, except that a resistor 62 of the source device 601 is driven by the inverter 620.

When the input of the inverter 620 is HIGH, the resistor 621 is a pull-down resistor, and thus, the voltage becomes 0V which is, for the sink device, the same as when an E-HDMI non-compatible device is connected. As a result, a signal SG623, of the sink device, indicating the result of identification of the E-HDMI compatibility becomes LOW, and the analog switches 691 to 694 controlled by the signal SG623 are opened, and the analog switches 696 and 697 controlled by a signal, which is the signal SG623 inverted by the inverter 695, become conductive. As a result, the sink device 602 is placed in a state where the SCL line 803 and the SDA line 804 are cut off from a LAN transmitter/receiver and are connected to the DDC transmitter/receiver.

On the other hand, with the source device, the input of the inverter 620 is also inputted to the NOR gate 640, and its output SG614 becomes LOW. The analog switches 641 to 644 controlled by the output signal SG614 of the NOR gate 640 are opened, and the analog switches 646 and 647 controlled by a signal, which is the signal SG614 inverted by the inverter 645, become conductive. As a result, the source device 601 also is placed in a state where the SCL line 803 and the SDA line 804 are cut off from the LAN transmitter/receiver and are connected to the DDC transmitter/receiver.

On the contrary, when the input of the inverter 620 is LOW, both the source device and the sink device are placed in a state where the SCL line 803 and the SDA line 804 are cut off from the DDC transmitter/receiver and are connected to the LAN transmitter/receiver.

The circuits 631 to 634 and 681 to 683 for checking the connection based on the DC bias potential of the HPD line 802 have the same function as the example as shown in FIG. 8. That is, in addition to the LAN communication described above, the HPD line 802 notifies the source device, via the DC bias level, of the connecting of the cable 351 to the sink device. When the cable 351 is connected to the sink device, the resistors 682 and 683 and the choke coil 681 within the sink device bias the HPD line 802 to about 4V via the terminal 822.

The source device extracts the DC bias of the HPD line 802 by the low-pass filter formed from the resistor 632 and the capacitor 633, and compares the DC bias with a reference voltage Vref2 (for example, 1.4V) by the comparator 634. If the cable 351 is not connected to the sink device, the potential of the terminal 812 is lower than the reference voltage Vref2 due to the pull-down resistor 631, but if the cable 351 is connected to the sink device, the potential of the terminal 812 is higher than the reference voltage Vref2. Accordingly, if an output signal SG613 of the comparator 634 is HIGH, it is indicated that the cable 351 and the sink device are connected. On the other hand, if the output signal SG613 of the comparator 634 is LOW, it is indicated that the cable 351 and the sink device are not connected.

As described above, the configuration example as shown in FIG. 32 has a configuration where, with an interface performing, by one cable, video and audio data transmission; communication of exchange and authentication of connected device information, and device control data; and LAN communication; the LAN communication is performed as single direction communication through two pairs of differential transmission lines and connection status of the interface is notified by a DC bias potential of at least one of the transmission lines. Furthermore, since at lease two transmission lines are used for the communication, time-divided from the LAN communication, of exchange and authentication of the connected device information, a time-division is enabled that divides from each other a time slot during which the SCL line and the SDA line are connected to a LAN communication circuit by a switch and a time slot during which the SCL line and the SDA line are connected to a DDC circuit by the switch. Due to the dividing, a circuit for the LAN communication can be configured regardless of electrical specifications specified for DDC, and a steady and reliable LAN communication can be achieved at a low cost.

Incidentally, communication is performed where, for the SDA and the SCL, H is a pull-up to 1.5 KΩ and L is a pull-down to a low impedance, and, for the CEC, H is a pull-up to 27 KΩ and L is a pull-down to a low impedance. To have these functions to keep the compatibility with the existing HDMI, to share the function of LAN performing high-speed data communication requiring the ends of a transmission path to be matched may become difficult.

The configuration examples of FIGS. 8 and 32 can avoid such a problem. That is, the configuration example of FIG. 8 is configured such that full duplex communication according to one-pair bidirectional communication is performed with the reserved line and the HPD line being a differential pair and without the SDA, SCL and CEC lines being used. Also, the configuration example of FIG. 32 is configured such that two-pair full-duplex communication is performed where the HPD line and the SDA line, and the SCL line, and also the reserved line form two sets of differential pairs, and a single direction communication is performed by each of the differential pairs.

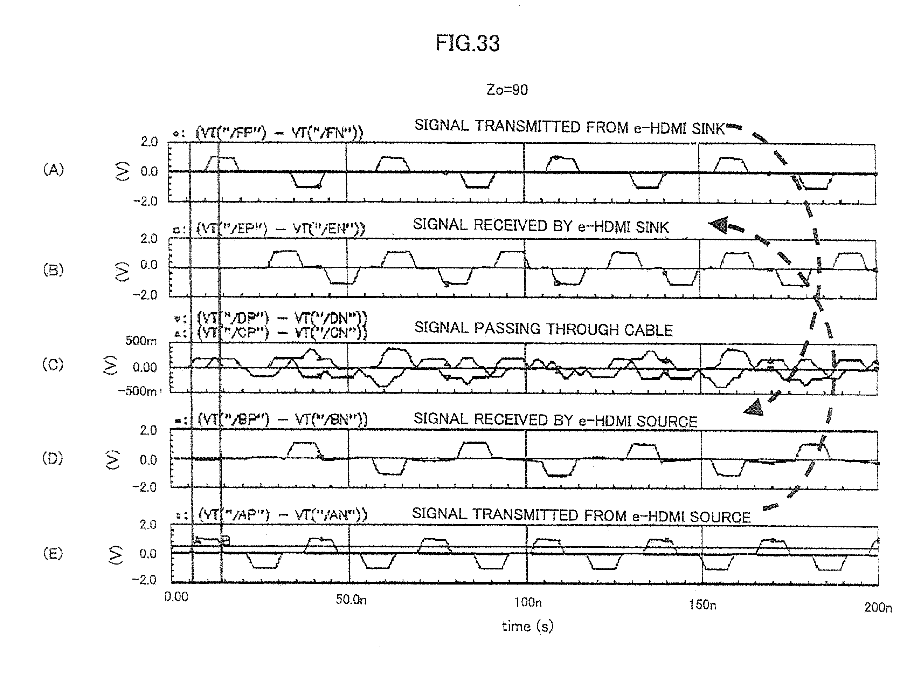

(A) to (E) of FIG. 33 show bidirectional communication waveforms for the configuration example of FIG. 8 or FIG. 32.

(A) of FIG. 33 shows a signal waveform transmitted from the source device, (B) of FIG. 33 shows a signal waveform received by the sink device, (C) of FIG. 33 shows a signal waveform passing through the cable, (D) of FIG. 33 shows a signal received by the source device, and (E) of FIG. 33 shows a signal waveform transmitted from the source device, respectively. As is apparent from FIG. 33, favorable bidirectional communication can be achieved by the configuration example of FIG. 8 or FIG. 32.

Incidentally, in the above-described embodiments, the description is given with the assumption that an interface according to HDMI specifications is the transmission line connecting each device. However, the embodiments can be applied to other similar transmission standards. Also, although a game machine is used as the source device and a television receiver is used as the sink device as an example, the present invention can be similarly applied to that which uses other transmission devices and reception devices.

Also, in the above-described embodiments, it is indicated that the electronic devices are connected to each other by the HDMI cable. However, the present invention can be similarly applied to that which performs the connection of the electronic devices wirelessly.

### Industrial Applicability

The present invention is capable of favorably performing display of an additional-value added image that is, for instance, added with grain noise or converted to high resolution, and can be applied to an AV system configured by connecting a game machine and a television receiver by an interface according to HDMI standard, or the like.

## Claims

1. A transmission device comprising:
a signal transmitting section for unidirectionally transmitting a baseband video signal as a differential signal to an external device through a transmission line via multiple channels; and
a communication section for performing bidirectional communication by using predetermined lines forming the transmission line, wherein
at least second image data adding to first image data an additional value corresponding to the first image data is transmitted to the external device by the signal transmitting section or the communication section.

2. The transmission device according to claim 1, wherein the predetermined lines are a reserved line and a HPD line forming an HDMI cable.

3. The transmission device according to claim 1, wherein the second image data is any of grain noise data, high resolution difference data and luminance difference data.

4. The transmission device according to claim 1, wherein the second image data is interpolation image data to be interpolated between frames of the first image data.

5. The transmission device according to claim 1, wherein the second image data is image data for a right eye when the first image data is image data for a left eye, and is the image data for a left eye when the first image data is the image data for a right eye.

6. The transmission device according to claim 1, wherein the second image data is image data for interface screen.

7. The transmission device according to claim 1, wherein
the first image data is transmitted to the external device by one of the signal transmitting section and the communication section, and the second image data is transmitted to the external device by the other, further including:
a synchronization information obtaining section for obtaining, from the external device and by using the communication section, synchronization information indicating a lag between a timing of image display based on image data transmitted by the signal transmitting section and a timing of image display based on image data transmitted by the communication section; and
a transmission timing adjusting section for adjusting transmission timings of the first image data and the second image data based on the synchronization information obtained by the synchronization information obtaining section.

8. An image data transmission method for transmitting first image data and second image data adding to the first image data an additional value corresponding to the first image data to an external device, providing:
a signal transmitting section for unidirectionally transmitting a baseband video signal as a differential signal to the external device through a transmission line via multiple channels; and
a communication section for performing bidirectional communication by using predetermined lines forming the transmission line, and
the first image data is transmitted to the external device by one of the signal transmitting section and the communication section, and the second image data is transmitted to the external device by the other.

9. The image data transmission method according to claim 8, wherein the predetermined lines are a reserved line and a HPD line forming an HDMI cable.

10. A reception device comprising:
a signal receiving section for receiving a baseband video signal as a differential signal from an external device through a transmission line via multiple channels;
a communication section for performing bidirectional communication by using predetermined lines forming the transmission line; and
an image display section for performing image display using at least second image data, which is received by the signal transmitting section or the communication section and which adds to first image data an additional value corresponding to the first image data, and the first image data.

11. The reception device according to claim 10, wherein the predetermined lines are a reserved line and a HPD line forming an HDMI cable.

12. The reception device according to claim 10, wherein
the second image data is any of grain noise data and high resolution difference data, and
the image display section generates combined image data where the second image data is added to the first image data, and displays an image based on the combined image data.

13. The reception device according to claim 10, wherein
the second image data is luminance difference data, and
the image display section displays a high-luminance converted image based on the first image data and the luminance difference data.

14. The reception device according to claim 10, wherein
the second image data is interpolation image data to be interpolated between frames of the first image data, and
the image display section generates combined image data by inserting the second image data between the frames of the first image data, and displays an image based on the combined image data.

15. The reception device according to claim 10, wherein
the second image data is image data for a right eye when the first image data is image data for a left eye, and is the image data for a left eye when the first image data is the image data for a right eye, and
the image display section displays a left eye image or a right eye image by the first image data, and displays a right eye image or a left eye image by the second image data.

16. The reception device according to claim 10, wherein
the second image data is image data for interface screen, and
the image display section displays an interface screen based on the second image data along with displaying an image based on the first image data.

17. The reception device according to claim 16, wherein the interface screen is displayed on the image based on the first image data.

18. The reception device according to claim 16, wherein the interface screen is displayed at a position separate from a screen based on the first image data.

19. An image display method of a reception device comprising a signal receiving section for receiving a baseband video signal as a differential signal from an external device through a transmission line via multiple channels, wherein
a communication section for performing bidirectional communication by using predetermined lines forming the transmission line is provided, and
an image display is performed by using at least second image data, which is received by the signal transmitting section or the communication section and which adds to first image data an additional value corresponding to the first image data, and the first image data.

20. The image display method of a reception device according to claim 19, wherein the predetermined lines are a reserved line and a HPD line forming an HDMI cable.
